(19) Europäisches Patentamt
European Patent Office
Office européen des brevets

(11) **EP 1 658 676 B1**

(12) **EUROPÄISCHE PATENTSCHRIFT**

(45) Veröffentlichungstag und Bekanntmachung des Hinweises auf die Patenterteilung:
**03.01.2007  Patentblatt 2007/01**

(21) Anmeldenummer: **04764472.9**

(22) Anmeldetag: **25.08.2004**

(51) Int Cl.:
*H03K 17/16* (2006.01)     *H02M 3/158* (2006.01)

(86) Internationale Anmeldenummer:
**PCT/EP2004/009496**

(87) Internationale Veröffentlichungsnummer:
**WO 2005/022748 (10.03.2005 Gazette 2005/10)**

(54) **SCHALTUNG UND VERFAHREN ZUM VERARBEITEN EINER SPEISESPANNUNG MIT SPANNUNGSSPITZEN**

CIRCUIT AND METHOD FOR CONDITIONING A SUPPLY VOLTAGE CONTAINING VOLTAGE PEAKS

CIRCUIT ET PROCEDE POUR TRANSFORMER UNE TENSION D'ALIMENTATION A PICS DE TENSION

(84) Benannte Vertragsstaaten:
**AT DE GB**

(30) Priorität: **27.08.2003  DE 10339478**
**29.01.2004  DE 102004004541**

(43) Veröffentlichungstag der Anmeldung:
**24.05.2006  Patentblatt 2006/21**

(73) Patentinhaber: **Fraunhofer-Gesellschaft zur Förderung der angewandten Forschung e.V.**
**80686 München (DE)**

(72) Erfinder:
• **HACKNER, Michael**
**92331 Parsberg (DE)**
• **ERNST, Roland**
**91052 Erlangen (DE)**
• **HOHE, Hans-Peter**
**91332 Heiligenstadt (DE)**

(74) Vertreter: **Zinkler, Franz et al**
**Schoppe, Zimmermann, Stöckeler & Zinkler**
**Postfach 246**
**82043 Pullach bei München (DE)**

(56) Entgegenhaltungen:
**EP-A- 0 899 946**

• **U. TIETZE, CHR. SCHENK: "Halbleiterschaltungstechnik 10. Auflage, Kapitel 18.3 Lineare Spannungsregler" 1993, SPRINGER VERLAG , BERLIN 561846 , XP002314725 Seite 542, Absatz 18.3 - Seite 543; Abbildung 18.8**
• **NATIONAL SEMICONDUCTOR: "LP2975 MOSFET LDO Driver/Controller" [Online] 1. Juli 2000 (2000-07-01), NATIONAL SEMICONDUCTOR CORPORATION , XP002314726 Gefunden im Internet: URL:http://www.national.com/apnotes/ Positi veVoltage-Fixed.html> [gefunden am 2004-12-12] Seite 4 - Seite 12**
• **NATIONAL SEMICONDUCTOR CORPORATION: "LP2989LV Micropower 500mA Low Noise Dropout Regulator for Applications with Output Voltages < 2 V. Designed for Use with Very Low ESR Output Capacitors" [Online] 1. Januar 2002 (2002-01-01), NATIONAL SEMICONDUCTOR CORPORATION , XP002314727 Gefunden im Internet: URL:http://www.national.com/apnotes/ Positi veVoltage-Fixed.html> [gefunden am 2004-12-12] Seite 3 - Seite 8**
• **LINEAR TECHNOLOGY: "AN30 Switching Regulator Circuit Collection" [Online] 1. Februar 1989 (1989-02-01), LINEAR TECHNOLOGY , XP002314728 Gefunden im Internet: URL:http: //www.linear.com/pc/downloadDocum ent.do? navId=H0,C1,C1154,C1009,C1021,P1222 , D4123> [gefunden am 2004-12-12] Seite 14 - Seite 34; Abbildungen 18,51**

EP 1 658 676 B1

- **WONG J: "SPANNUNGSREGLER MIT MINIMALER VERLUSTLEISTUNG. \OPTIMAL FUER ANWENDUNGEN IN BATTERIEBETRIEBENEN GERAETEN" ELEKTRONIK, FRANZIS VERLAG GMBH. MUNCHEN, DE, Bd. 40, Nr. 12, 11. Juni 1991 (1991-06-11), Seiten 96,98-102, XP000234722 ISSN: 0013-5658**

## Beschreibung

Die vorliegende Erfindung bezieht sich auf Schaltungen zum Verarbeiten von Speisespannung mit Spannungsspitzen und insbesondere auf Schaltregler, bei denen die Siebkapazität eine solche Schaltung aufweist.

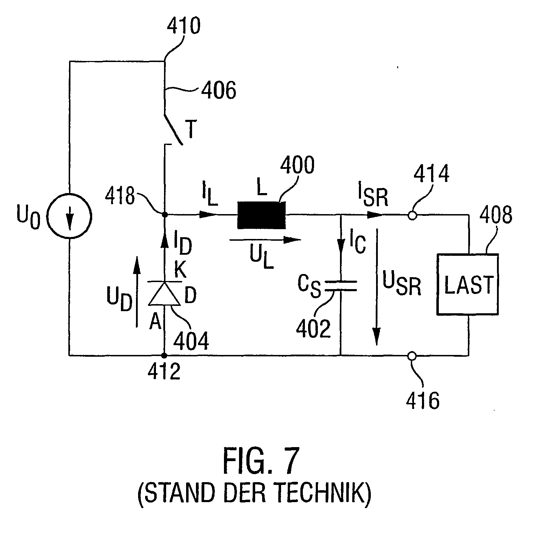

Fig. 7 zeigt einen bekannten Abwärts-Wandler mit einem einfachen Schalter, wie er beispielsweise in "Halbleiterschaltungstechnik" U. Tietze, C.H. Schenk, Springer-Verlag, 9. Auflage, 1989, Abbildung 18.37 auf Seite 564 sowie in der Patentschrift EP 0899946 gezeigt ist. Der Abwärts-Wandler in Fig. 7 umfasst eine ringartige Verschaltung mit einer Spule 400, einem Kondensator 402 und einer Diode 404. Der Abwärts-Wandler bzw. Schaltregler in Fig. 7 umfasst ferner einen Ladeschalter 406 sowie eine in Fig. 7 nicht gezeigte Steuerung, die ausgebildet ist, um den Ladeschalter 406 so zu steuern, dass die Ausgangsspannung des Schaltreglers, die in Fig. 7 mit $U_{SR}$ bezeichnet ist, auf einem definierten Niveau zu halten bzw. in einem Bereich um das definierte Niveau herum zu halten.

Die in Fig. 7 gezeigte Schaltung umfasst eine bestimmte Anzahl von Knoten, die nachfolgend dargelegt werden. An einem ersten Eingangsknoten 410 der Schaltung wird ein Pol einer Eingangsspannungsquelle $U_0$ angeschlossen, während an einem zweiten Eingangsknoten 412 ein anderes Potential der Eingangsquelle $U_0$ angeschlossen wird. Der zweite Eingangsknoten 412 ist typischerweise der Masseknoten. Ein erster Ausgangsknoten 414 wird auch als erste Ausgangsschiene oder positive Ausgangsschiene bezeichnet, während ein zweiter Ausgangsknoten 416 auch als zweite Ausgangsschiene bzw. negative Ausgangsschiene bezeichnet wird, wenn die in Fig. 7 gezeigte Konvention für die Ausgangsspannung des Schaltreglers $U_{SR}$ verwendet wird. Der Schalter 406 ist einerseits zwischen den ersten Eingangsknoten 410 und einen ersten Zwischenknoten 418 geschaltet. Ferner ist die Diode 404 so zwischen den ersten Zwischenknoten 418 und den zweiten Eingangsknoten 412 geschaltet, dass die Anode der Diode mit dem zweiten Eingangsknoten 412 verbunden ist, während die Kathode der Diode mit dem ersten Zwischenknoten 418 verbunden ist. Ferner ist, wie es in Fig. 7 gezeigt ist, der Kondensator 402 zwischen den ersten Ausgangsknoten 414 und den zweiten Ausgangsknoten 416 geschaltet. Gemäß der in Fig. 7 gezeigten Konfiguration des Netzwerkes aus Diode, Spule und Kondensator ist die Spule zwischen den ersten Zwischenknoten 418 und den ersten Ausgangsknoten 414 geschaltet.

Nachfolgend wird auf die Funktionalität der in Fig. 7 gezeigten Schaltung eingegangen. So lange der Schalter 406 geschlossen ist, wird $U_D$ gleich der negativen Eingangsspannung $U_0$. Wenn er sich öffnet, behält der Drosselstrom $I_L$ seine Richtung bei, und $U_D$ sinkt betragsmäßig ab, bis die Diode leitend wird, also ungefähr auf 0-Potential. Der zeitliche Verlauf des Spulenstroms ergibt sich aus dem Induktionsgesetz, gemäß dem die Spannung an der Spule gleich dem Produkt aus der Induktivität L der Spule und der Ableitung des Spulenstroms nach der Zeit ist. Während der Einschaltzeit, also wenn die Eingangsspannung $U_0$ an der Diode 404 anliegt, liegt an der Drossel die Spannung $U_0 - U_{SR}$ an. Während der Ausschaltzeit $t_{aus}$ des Schalters 406 liegt an der Drossel die Spannung $U_L = -U_{SR}$ an. Daraus ergibt sich eine betragsmäßige Stromänderung $\Delta I_L$, die folgendermaßen gegeben ist:

$$\Delta I_L = 1/L \cdot (-U_{SR}) \cdot \Delta t_{aus} = 1/L \, (U_0 - U_{SR}) \, t_{ein}$$

Aus dieser Bilanz lässt sich wiederum die Ausgangsspannung berechnen, die folgendermaßen definiert ist:

$$U_{SR} = [t_{ein}/(t_{ein} + t_{aus})] \cdot U_0 = t_{ein}/T \cdot U_0 = p \cdot U_0.$$

In der vorstehenden Gleichung ist $T = t_{ein} + t_{aus} = 1/F$ die Schwingungsdauer, und $p = t_{ein}/T$ ist das sogenannte Tastverhältnis. Es ist zu sehen, dass sich als Ausgangsspannung erwartungsgemäß der arithmetische Mittelwert von $U_D$ ergibt. Typischerweise wird die Induktivität L der Spule 400 so gewählt, dass ein Minimalstrom nicht unterschritten wird, wie es in der Technik bekannt ist. Ferner ist bekannt, dass mit Erhöhung der Taktfrequenz die Induktivität verkleinert werden kann. Ferner steigt bei zu hohen Frequenzen der Aufwand für den Schalttransistor und die Ansteuerschaltung. Außerdem nehmen dynamische Schaltverluste proportional zur Frequenz zu.

Der Kondensator 402 und die Drossel (400) bestimmen die Welligkeit der Ausgangsspannung. Die Erzeugung des Schaltsignals zum Schalten des Lade-Transistors 406 erfolgt üblicherweise durch einen Impulsbreitenmodulator und einen Regler mit Spannungsreferenz. Im einzelnen wird eine Referenzspannung, die einen Sollwert liefert, einem Subtrahierer zugeführt, dem auch die aktuelle Ausgangsspannung $U_{SR}$ als Ist-Wert zugeführt wird. Das Ausgangssignal des Subtrahierers wird einem Regelverstärker zugeführt, der einen Komparator speist, in den andererseits ein von einem Sägezahngenerator erzeugtes Signal zugeführt wird. Das Ausgangssignal des Komparators ist das Steuersignal für den Schalter 406 in Fig. 7. Typischerweise ist der Regelverstärker ein PI-Regelverstärker. Er erhöht sein Ausgangssignal so lange, bis die Differenz am Ausgang des Subtrahierers zu 0 wird, bis also die Ausgangsspannung $U_{SR}$ gleich der Soll-Ausgangsspannung ist. Typische Größenordnungen für die Dimensionierung der Spule sind im Milli-Henry-Bereich (z. B. 2,7 mH), während typische Werte für Kondensatoren im dreistelligen Mikro-Farad-Bereich (z. B. 100 μF) liegen, wenn Schaltfrequenzen im Bereich von 50 kHz verwendet werden.

In Fig. 7 gezeigte Schaltregler sollen eine geeignete Spannungsversorgung an eine nachfolgend angeschlossene Schaltung, wie beispielsweise einen ASIC, liefern. Die Spannungsversorgung besteht in der Regel aus einer oder mehreren konstanten Gleichspannungen von beispielsweise +5 V oder ±15 V. Oft steht diese nicht von vorneherein in der gewünschten Form zur Verfügung und muss erst durch beispielsweise einen in Fig. 7 gezeigten Schaltregler, der durch einen nachgeschalteten Linearregler ergänzt werden kann, um die Welligkeit der Ausgangsspannung zu beseitigen, erzeugt werden. Eingangsseitig an dem in Fig. 7 gezeigten Schaltregler liegt üblicherweise ein Gleichrichter vor, der aus dem Wechsel- bzw. Drehstromnetz (230 V bzw. 400 V) der E-lektrizitätswerke die Eingangsspannung $U_0$ erzeugt.

So existieren abweichend von dem in Fig. 7 gezeigten Schaltregler auch andere Regler mit einem Transformator, einem Gleichrichter, einem Glättungs-Kondensator und eventuell einem Linearregler zur Spannungs-Stabilisierung. Allerdings ist der Transformator aufwendig herzustellen und damit teuer. Ferner benötigt er viel Platz. Ein weiterer Nachteil des Transformators besteht in seinem frequenzabhängigen Arbeitsbereich. Dieser ist z. B. auf die Netzfrequenz von 50 Hz bzw. 60 Hz eingeschränkt. Weicht die Frequenz ab, dann hat dies auch eine Abweichung der Ausgangsspannung des Transformators zur Folge. Bei einer Gleichspannung am Eingang funktioniert die Spannungs-Übertragung nicht.

Läßt man den Transformator weg und verwendet nur Gleichrichter, Glättungskondensator und einen Linearregler, dann geht viel Energie in Form von Wärme verloren. Außerdem muss dann für eine ausreichende Kühlung des Linearreglers gesorgt werden, die wiederum sehr aufwendig ist und Platz braucht. Dies alles wird dadurch umgangen, wenn man, wie es anhand von Fig. 7 dargestellt worden ist, anstelle des Linearreglers einen Schaltregler verwendet. Durch den deutlich besseren Wirkungsgrad geht wenig Energie in Form von Wärme verloren und folglich ist der Aufwand für die Kühlung deutlich geringer. Der Schaltregler benötigt, wie es ausgeführt worden ist, eine Drossel (die Induktivität 400 in Fig. 7), die relativ aufwendig in der Herstellung ist. Diese hat jedoch nur eine Wicklung und ist damit einfacher herzustellen als ein Transformator, der zwei Wicklungen besitzt. Außerdem kann die Drossel durch Wahl einer höheren Arbeits-Frequenz verkleinert werden, was auch bei Transformatoren funktioniert.

Viele bekannte Schalt-Netzteile, so auch das in Fig. 7 gezeigte Schaltnetzteil sind in bestimmter Hinsicht problematisch. Üblicherweise ist der Eingangsspannungs-Bereich auf ein Verhältnis von $U_{E,max}/U_{E,min} \leq 5$ beschränkt, was aus den Katalogen verschiedener Hersteller zu sehen ist. Dieser Bereich ist für manche Anwendungen zu gering und sollte erhöht werden, und zwar auf ein Verhältnis von z. B. 20:1.

Die Spannungsversorgung des Reglers selbst erfolgt entweder über eine separate Spannungsquelle oder wird aus der Eingangsspannung erzeugt, was einen zusätzlichen Spannungsregler und damit zusätzlichen Aufwand bedeutet.

Ferner wird für einen flexiblen Einsatz angestrebt, die Eingangsspannung deutlich größer wählen zu können, als die maximale zulässige Betriebsspannung des Reglers selbst, ohne dass zusätzliche Spannungs-Regler für die Erzeugung dieser Betriebsspannung verwendet werden.

Außerdem sollte bei Anlegen der Eingangsspannung ein möglichst schnelles, kontrolliertes Anlaufen des Schaltreglers gewährleistet sein. Insbesondere für zeitkritische Anwendungen sollte diese sogenannte Anlauf-Verzögerung so klein als möglich sein.

Die DE 199 46 025, die DE 197 00 100 C2, die DE 195 07 553 A1 oder die DE 197 06 491 A1 offenbaren Schaltregler, die auf der Basis des in Fig. 7 gezeigten Prinzipschaltbilds arbeiten, wobei je nach Ausführungsform die Spule 400 entweder zwischen dem ersten Zwischenknoten 418 und dem ersten Ausgangsknoten 414, wie in Fig. 7 gezeigt, angeordnet ist, oder alternativ zwischen dem zweiten Eingangsknoten 412 und dem zweiten Ausgangsknoten 416 angeordnet ist. Die Steuerspannung für den Schalter 406, der als Transistor ausgeführt sein kann, wird von dem Regler, der das Timing des Schalters 406 bestimmt, oder extern erzeugt. Dies führt zu zusätzlichem Schaltungsaufwand, der im Hinblick auf den Entwurf, das Testen und die Herstellung zusätzliche Kosten bedeutet. Zusätzliche Kosten sind insbesondere deswegen nachteilhaft, da Schaltregler insbesondere, wenn sie innerhalb von Leuchten vorgesehen sind oder aber auch voll integriert mit einer zu versorgenden integrierten Schaltung ausgeführt sind, den Preis des Endprodukts erhöhen und insbesondere bei Chipanwendungen, bei denen die Chipfläche ein Kriterium ist, aufgrund des erhöhten Chipflächen-Verbrauchs entstehen.

Insbesondere beim Hochfahren eines Schaltnetzteils, also beim ursprünglichen Einschalten der an dem Lastschalter und der Diode anliegenden Eingangsspannung kann es vorkommen, dass hohe Spannungsspitzen entstehen. Dies liegt daran, dass dann, wenn eine Spule von einem Strom durchflossen wird, und der Strom ausgeschaltet wird bzw. auf einen anderen Stromwert umgesetzt wird, eine hohe Spannungsspitze mit im Vergleich zur vorherigen Stromrichtung entgegengesetzten Richtung auftritt. Nachdem Schaltnetzteile bzw. solche Schaltregler, wie sie in Fig. 7 dargestellt sind, darauf basieren, dass ständig ein Strom durch eine Spule (und einen in Serie geschalteten Kondensator) ein- bzw. ausgeschaltet wird, können hierbei bereits Spannungsspitzen entstehen. Insbesondere jedoch im Hochlaufvorgang, wo die Zustände nicht derart definiert sind, bzw. wo initiale Steuerungen vorgenommen werden müssen, die möglicherweise einen Strom durch eine Spule auf 0 setzen, können solche Spannungsspitzen entstehen. Wird die Ausgangsspannung, die eine solche Spannungsspitze enthält, dazu verwendet, z. B. bei einem Schaltregler die Steuerung des Schaltreglers selbst zu versorgen, so kann es sein, dass eine solche Spannungsspitze in dem Ausgangssignal, das die Steuerung versorgen soll, zu einer Zerstörung der Steuerung bzw. von Eingangskomponenten der Steuerung führen kann. Dem könnte dadurch entgegengewirkt werden, dass die Eingangsstufen der Steuerung sehr spannungsfest ausgelegt werden. Diese im Hinblick auf die Spannungsfestigkeit und im Hinblick auf den normalen Betrieb erforderliche Überdimensionierung führt jedoch zu zusätzlichen Kosten. Dieser Weg wird immer weniger gangbar, wenn sehr hohe Spannungsspitzen und relativ geringe Ausgangs-Betriebsspannung bzw. Ausgangsspannungs-Sollwert benötigt werden. Dann wird das "Missverhältnis" zwischen Spannungsauslegung der Steuerung einerseits und der eigentlich von der Steuerung zu bewältigenden Spannung andererseits immer größer.

Die DE 4007593 A1 offenbart ein Eingangsstromspitzenvermeidendes Schaltnetzteil. Zur Vermeidung von Eingangsstromspitzen beim Einstecken bzw. Einschalten eines Schaltnetzteils oder beim Nachladen des Schaltnetzteils nach einem Ausfall der Eingangsnetzwechselspannung oder nach einem Einbruch derselben während des Betriebs wird der Eingangskondensator eines schnell getakteten Spannungsreglers eliminiert und wird statt dessen ein Ausgangskondensator an den Ausgang des Schaltnetzteils verlegt. Gleichzeitig wird der schnell getaktete Spannungsregler selbst mit einer aktiven Strombegrenzung ausgestattet, um denselben vor einer Zerstörung zu schützen. Der schnell getaktete Spannungsregler wird von einem Gleichrichter versorgt, der wiederum gekoppelt über ein Eingangsfilter mit der Netzwechselspannung selbst verbunden ist.

Nachteilig an diesen Konzepten der aktiven Strombegrenzung ist die Tatsache, dass die aktive Strombegrenzung schaltungstechnisch implementiert werden muss, was insbesondere bei integrierten Ausführungen zu einem zusätzlichen Testaufwand und zu einem potentiell erhöhten Ausschussanteil der fertig integrierten Schaltungen führt, da sich die Anzahl der Komponenten gegenüber einem Fall ohne aktive Strombegrenzung deutlich erhöht hat.

Die Aufgabe der vorliegenden Erfindung besteht darin, ein wirtschaftliches Konzept zum Verarbeiten einer Speisespannung mit Spannungsspitzen und insbesondere einen preisgünstigeren Schaltregler, der vor Spannungsspitzen geschützt ist, zu schaffen.

Diese Aufgabe wird durch eine Schaltung zum Verarbeiten einer Speisespannung nach Patentanspruch 1, ein Verfahren zum Verarbeiten einer Speisespannung mit Spannungsspitzen nach Patentanspruch 14 oder einen Schaltregler zum Erzeugen einer geregelten Schaltregler-Ausgangsspannung nach Patentanspruch 15 gelöst.

Der vorliegenden Erfindung liegt die Erkenntnis zugrunde, dass eine mit Spannungsspitzen versehene Speisespannung derart verarbeitet wird, dass die Spannungsspitze nicht einfach abgeschnitten wird, sondern dass die in der Spannungsspitze enthaltene Energie eingesetzt wird, um eine Ausgangsspannung schneller auf den Soll-Ausgangsspannungspegel zu treiben, als wenn die Spannungsspitze einfach abgeschnitten werden würde, d. h. die Energie derselben nicht ausgenutzt werden würde. Hierzu werden zwei Kapazitäten über einen steuerbaren Widerstand gekoppelt. Eine Steuerungseinrichtung zum Ansteuern des steuerbaren Widerstandes ist ausgebildet, um den steuerbaren Widerstand auf einen hohen Widerstandswert einzustellen, wenn die Eingangsspannung unterhalb eines Eingangsspannungs-Sollwerts ist. Wenn die Eingangsspannung dann den Sollwert überschreitet, d. h. wenn die an der ersten Kapazität anliegende Spannung, die gleich der Eingangsspannung ist, größer als der vorbestimmte Wert wird, wird der Widerstandswert des steuerbaren Widerstands reduziert, derart, dass die Eingangsspannung konstant bleibt oder langsamer als die Speisespannung steigt. Durch Reduzieren des Widerstandswerts des steuerbaren Widerstands wird erreicht, dass Ladung in den zweiten Kondensator fließt. Eine Energie der Spannungsspitze wird somit nicht verworfen, sondern wird dazu verwendet, um den zweiten Kondensator aufzuladen. Sobald die Spannung an dem zweiten Kondensator einen vorbestimmten Ausgangsspannungs-Sollwert erreicht hat, wird der steuerbare Widerstand auf einen kleinen Widerstandswert gesteuert, derart, dass die beiden Kondensatoren im wesentlichen parallel geschaltet sind, also als resultierende Kapazität mit einem Kapazitätswert fungieren, der gleich der Summe der Kapazitätswerte der beiden Einzelkondensatoren ist. Durch Steuern des Widerstands, wenn die Eingangsspannung größer als der Eingangsspannungs-Sollwert geworden ist, wird erreicht, dass die Ladungsaufnahme des ersten Kondensators aufgrund der Speisespannung und aufgrund der in der Speisespannung möglicherweise bereits vorliegenden Spannungsspitze reduziert wird, so dass mehr Ladung in die zweite Kapazität fließt als in dem Fall, in dem der steuerbare Widerstand einen hohen Widerstandswert hatte.

Bei einem bevorzugten Ausführungsbeispiel der vorliegenden Erfindung ist die erste Kapazität, an der die Eingangsspannung anliegt, eine relativ kleine Kapazität, während die zweite Kapazität, an der die Ausgangsspannung anliegt, eine relativ große Kapazität ist. Damit wird erreicht, dass die Eingangsspannung schnell den Eingangsspannungs-Sollwert erreicht, der vorzugsweise dazu verwendet wird, um die Steuerung eines Schaltreglers zu versorgen. Durch das erfindungsgemäße Steuern des Widerstands, derart, dass derselbe immer kleiner wird, wird die Eingangsspannung begrenzt und vorzugsweise sogar konstant gehalten, so dass die Steuerung, die mit der Eingangsspannung versorgt wird, keine Spannungsspitze erhält und damit nicht entsprechend spannungsfest dimensioniert werden muss. Sobald der steuerbare Widerstand vorzugsweise monoton abhängig von der aktuellen Eingangsspannung geöffnet wird, fließt die in der Spannungsspitze enthaltene Energie in den großen zweiten Kondensator und wird somit dazu verwendet, um diesen zweiten Kondensator schnell aufzuladen. Eine solche schnelle Aufladung des zweiten Kondensators ist insbesondere für das schnelle Anlaufen von Schaltreglern vonnöten, da die Last, die der Schaltregler versorgt, die Ausgangsspannung erhält, also parallel zum zweiten Kondensator geschaltet ist.

Geht der Schaltregler dann in den stationären Betrieb über, so wird der steuerbare Widerstand auf einen kleinen Widerstandswert gebracht, derart, dass die beiden Kapazitäten parallel geschaltet werden und als eine einzige Kapazität mit der Summe der beiden Kapazitätswerte der beiden Einzelkondensatoren wirken.

Vorzugsweise wird als steuerbarer Widerstand ein Transistor verwendet, der zu Beginn, also wenn die Eingangsspannung kleiner als der Eingangsspannungs-Sollwert ist, gesperrt wird. Wenn der Eingangsspannungs-Sollwert durch die Eingangsspannung überschritten wird, geht der Transistor in den Triodenbereich über, um dann, wenn die Ausgangsspannung den Ausgangsspannungs-Sollwert erreicht hat, in den niederohmig leitenden Zustand gebracht zu werden.

Bei dem bevorzugten Ausführungsbeispiel der vorliegenden Erfindung wird der Übergang des Transistors vom Sperrbereich in den leitenden Bereich, also das Durchschreiten des Triodenbereichs des Transistors definiert und abhängig von der aktuellen Eingangsspannung und/oder der aktuellen Ausgangsspannung durchgeführt, derart, dass die Eingangsspannung aufgrund des "langsamen" Durchschaltens des Transistors gegenüber dem Wert, wo der Transistor ganz gesperrt war, nicht wesentlich abnimmt. Damit wird erreicht, dass die Eingangsspannung aufgrund der kleinen ersten Kapazität schnell ihren Sollwert erreicht, der, wenn die erfindungsgemäße Schaltung in einem Schaltregler eingesetzt wird, so bemessen ist, dass eine Steuerung des Schaltreglers bereits mit einer Spannung, die größer oder gleich dem Eingangsspannungs-Sollwert ist, arbeiten kann. Für einen Lastversorgungsbetrieb ist der Schaltregler dann bereit, wenn der Transistor ganz durchgeschaltet ist und die beiden Kapazitäten zusammen als eine einzige Kapazität wirken. In einem üblichen Schaltregler wird daher der Siebkondensator erfindungsgemäß durch die Schaltung zum Verarbeiten einer Speisespannung mit Spannungsspitzen ersetzt. Die Dimensionierung der einzelnen Kapazitäten zueinander wird so gewählt, dass die erste Kapazität so klein gemacht wird, dass sie in einer vorbestimmten Verzögerung nach dem Einschalten, also nach dem Anlegen der Eingangsspannung an Ladeschaltung und Diode auf den für die Steuerung benötigten Wert aufgeladen ist, während die zweite Kapazität dann so eingestellt wird, dass sie gleich der Differenz zwischen einem vorbestimmten Kapazitätswert für den Siebkondensator, der aufgrund der Welligkeit der Ausgangsspannung vordefiniert ist, und der Kapazität des ersten Kondensators dimensioniert ist.

Bevorzugte Ausführungsbeispiele der vorliegenden Erfindung werden nachfolgend Bezug nehmend auf die beiliegenden Zeichnungen detailliert erläutert. Es zeigen:

Fig. 1     ein Prinzipblockschaltbild des erfindungsgemäßen Schaltreglers;

Fig. 2     ein bevorzugtes Ausführungsbeispiel des erfindungsgemäßen Schaltreglers mit einem selbstsperrenden Transistor als Ladeschalter;

Fig. 3a    ein alternatives bevorzugtes Ausführungsbeispiel der vorliegenden Erfindung mit einem selbstleitenden Transistor als Ladeschalter;

Fig. 3b    ein alternatives Ausführungsbeispiel mit einem PMOS-Transistor als Schalter;

Fig. 4     ein Blockschaltbild der erfindungsgemäßen Schaltung zum Verarbeiten einer Speisespannung mit Spannungsspitzen;

Fig. 5     ein Flußdiagramm zur Erläuterung der Funktionsweise der Steuerungseinrichtung in Fig. 4;

Fig. 6a    einen Zeitverlauf der Speisespannung mit einer Spannungsspitze;

Fig. 6b    einen Zeitverlauf der Eingangsspannung ohne Spannungsspitze;

Fig. 6c    einen Zeitverlauf der Ausgangsspannung ohne Spannungsspitze;

Fig. 6d    einen Zeitverlauf des Widerstandswerts des steuerbaren Widerstands; und

Fig. 7     ein Blockschaltbild eines bekannten Schaltreglers, der auch als Buck-Converter bekannt ist.

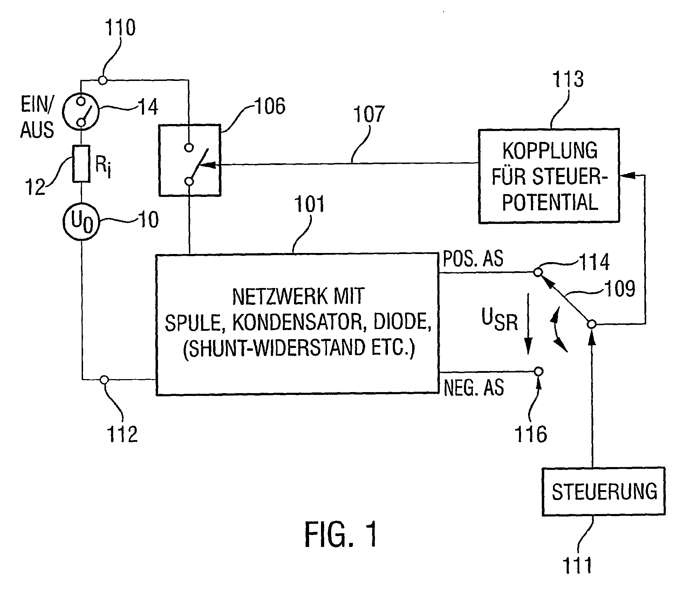

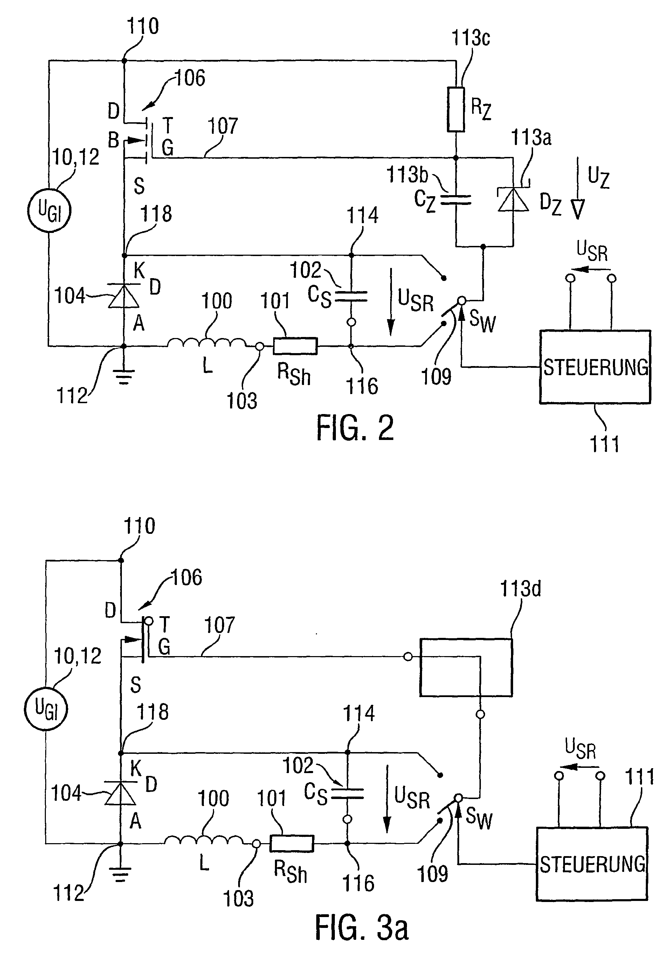

Bevor detailliert auf die erfindungsgemäße Schaltung zum Verarbeiten einer Speisespannung eingegangen wird, wird nachfolgend anhand der Fig. 1 bis 3a ein Schaltregler dargestellt, bei dem die erfindungsgemäße Schaltung zum Verarbeiten einer Speisespannung anstatt des Sieb-Kondensators (102 in den Fig. 2 und 3a) einsetzbar ist. Es sei jedoch darauf hingewiesen, dass die erfindungsgemäße Schaltung zum Verarbeiten einer Speisespannung nicht nur mit dem in den Fig. 2 und 3a dargestellten Schaltreglerkonzept sondern auch bei dem in Fig. 7 dargestellten Schaltreglerkonzept einsetzbar ist. Ferner sei darauf hingewiesen, dass die erfindungsgemäße Schaltung zum Verarbeiten jeder Speisespannung einsetzbar ist, die Spannungsspitzen hat, welche nicht oder nur reduziert an eine Ausgangsseite weitergegeben werden dürfen, da ausgangsseitig angeschlossene Schaltungen nicht für derartige Spannungsspitzen spezifiziert sind.

Fig. 1 zeigt einen erfindungsgemäßen Schaltregler zum Erzeugen einer geregelten Ausgangsspannung $U_{SR}$ unter Verwendung einer Eingangsspannung $U_0$, die aus Übersichtlichkeitsgründen als Spannungsquelle $U_0$ 10, die in Serie zu einem Innenwiderstand $R_i$ 12 geschaltet ist, gezeigt ist. Wenn ein Ein/Aus-Schalter 14 betätigt wird, liegt zwischen einem ersten Eingangsknoten 110 und einem zweiten Eingangsknoten 112 eine Spannung an. Zwischen den ersten Eingangsknoten 110 und den zweiten Eingangsknoten 112 sind gewissermaßen seriell zueinander ein steuerbarer Schalter 106 und ein Netzwerk 101 geschaltet, das ein typisches Schaltregler-Netzwerk mit einer Spule, einem Kondensator und einer Diode ist. Typischerweise haben solche Schaltregler-Netzwerke 101 auch noch einen Shunt-Widerstand, um einen Strompfad mit einem definierten Ohmschen Widerstand zu schaffen.

Die Ausgangsspannung, die von dem in Fig. 1 gezeigten erfindungsgemäßen Schaltregler geregelt wird, liegt zwischen einer ersten Ausgangsschiene, die auch als positive Ausgangsschiene bezeichnet wird und mit dem ersten Ausgangsknoten 114 identisch ist, und einer zweiten Ausgangsschiene, die auch als negative Ausgangsschiene bezeichnet wird und mit dem zweiten Ausgangsknoten 116 identisch ist, an. Bei dem in Fig. 1 gezeigten Ausführungsbeispiel ist die positive Ausgangsschiene 114 auf ein erstes (positives) Potential bringbar, während die negative Ausgangsschiene 116 auf ein zweites Potential bringbar ist, das kleiner als das erste Potential ist.

Das Netzwerk 101, das eine Spule, einen Kondensator und eine Diode aufweist, hat die Diode insbesondere so geschaltet, dass sie mit der positiven Ausgangsschiene gekoppelt ist, wenn die Spule mit der negativen Ausgangsschiene gekoppelt ist, oder dass sie mit der negativen Ausgangsschiene gekoppelt ist, wenn die Spule mit der positiven Ausgangsschiene gekoppelt ist. Typischerweise wird die Diode also mit einer Ausgangsschiene, entweder der positiven Ausgangsschiene 114 oder der negativen Ausgangsschiene 116, gekoppelt sein.

Der Schalter 106, der in Fig. 1 gezeigt ist, wird auch als Ladeschalter bezeichnet, da er zum Laden des Kondensators in dem Netzwerk 101 vorgesehen ist. Insbesondere ist er in Serie zu der Diode geschaltet. Der Ladeschalter umfasst ferner einen Steuereingang 107, über den der Ladeschalter 106 geschlossen werden kann, was bedeutet, dass die Eingangsspannung nicht an dem Ladeschalter abfällt, sondern an dem Netzwerk 101. Ist der Schalter dagegen geöffnet, so fällt die Eingangsspannung über dem Schalter ab, das Netzwerk 101 ist somit (abgesehen von transienten Zuständen) nicht mit der Eingangsspannung beaufschlagt.

Über den Steuereingang 107 kann der Ladeschalter somit geöffnet oder geschlossen werden. Das Netzwerk 101 umfasst ferner einen Kondensator, der auch als Siebkondensator bezeichnet wird und derart geschaltet ist, dass an dem Kondensator die geregelte Ausgangsspannung abgreifbar ist. Ein wesentlicher Teil des Netzwerks 101 ist ferner die Induktivität, die nachfolgend auch als Spule bezeichnet wird, welche einerseits mit der Diode und andererseits mit dem Kondensator gekoppelt ist.

Erfindungsgemäß umfasst der in Fig. 1 gezeigte Schaltregler ferner eine Umschalteinrichtung 109, die steuerbar ist, um abhängig von einem Umschaltsteuersignal, das von einer Steuerung 111 bereitgestellt wird, entweder die erste Ausgangsschiene 114 oder die zweite Ausgangsschiene 116 über eine Kopplungseinrichtung 113 mit dem Steuereingang 107 des Ladeschalters zu koppeln. Insbesondere ist der Ladeschalter 106 derart ausgebildet, dass er aufgrund eines Potentials an einer Ausgangsschiene geschlossen ist, und aufgrund eines Potentials an der anderen Ausgangsschiene geöffnet ist. Bei nachfolgend dargelegten Ausführungsbeispielen ist der Ladeschalter 106, wie später noch anhand der Fig. 2 und 3a dargestellt ist, als selbstleitender oder selbstsperrender NMOS-Transistor ausgeführt. In diesem Fall wird der Ladeschalter 106 durch das Potential an der positiven Ausgangsschiene geschlossen (leitend gemacht), während er durch das Potential an der negativen Ausgangsschiene geöffnet wird (in den Leerlauf gebracht wird).

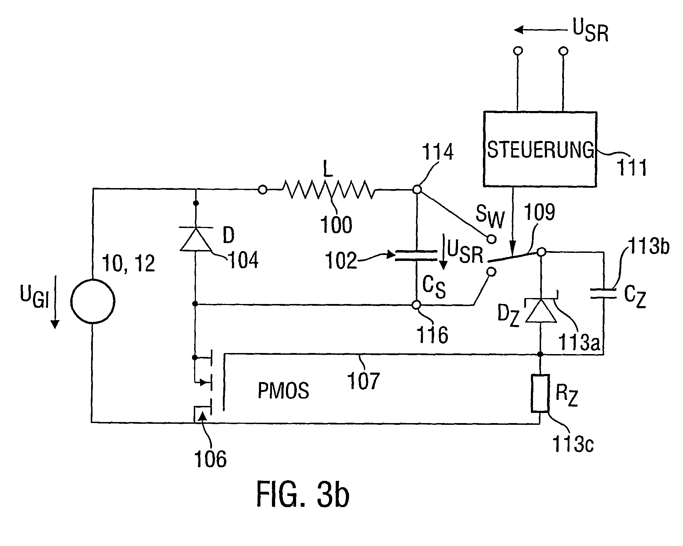

Wenn der Schalter 106 als PMOS-Transistor ausgeführt ist, werden die Spule 100 und gegebenenfalls der Shunt-Widerstand 101 zwischen die Knoten 118 und 114 geschaltet werden und die Knoten 112 und 116 kurzgeschlossen werden. und dass das Potential an der negativen Ausgangsschiene dafür verwendet wird, um den Schalter zu öffnen, während das Potential an der positiven Ausgangsschiene 114 verwendet wird, um den Schalter 106 zu schließen, also in den Leerlaufbetrieb zu bringen. Eine entsprechende Schaltung ist in Fig. 3b gezeigt.

Üblicherweise wird die Steuerung 111 einen Regler umfassen, der beliebig ausgestaltet sein kann, so lange er ein Signal ausgibt, das dazu führt, dass durch Öffnen und Schließen des Ladeschalters 106 die Ausgangsspannung $U_{SR}$ einen definierten erwünschten Zeitverlauf hat. Üblicherweise wird der Regler 111 derart arbeiten, dass er eine Ausgangsspannung mit einem Mittelwert am Ausgang 114, 116 des Netzwerks 101 sicherstellt, unabhängig davon, welche Last angeschaltet ist bzw. welchen Strom eine Last zieht. Der Zeitverlauf der Spannung $U_{SR}$ wird typischerweise ein Spannungsverlauf mit einer gewissen Welligkeit um einen Mittelwert herum sein. Die Welligkeit kann durch Dimensionierung von Spule und Kondensator in vorbestimmte Toleranzbereiche gebracht werden, wobei in vielen Fällen ein Signal mit einer Welligkeit um einen Mittelwert herum bereits ausreichend ist, und zwar insbesondere dann, wenn die Anforderungen an das Schaltregler-Ausgangssignal, also die Spannung $U_{SR}$, nicht sehr hoch sind, wie beispielsweise für eine Lampe oder etwas ähnliches. Andererseits wird in dem Fall, in dem der Schaltregler, wie er in Fig. 1 gezeigt ist, zusammen mit einer von ihm zu versorgenden integrierten Schaltung auf einem Substrat integriert ist, derselbe noch durch einen dem Ausgang 114, 116 des Schaltreglers nachgeschalteten Linearregler ergänzt sein, um Anforderungen an eine Spannung $U_{SR}$ zu erfüllen, die die Möglichkeiten des in Fig. 1 gezeigten Schaltreglers übersteigen, um mit vernünftigem Aufwand ein Ausgangssignal $U_{SR}$ mit entsprechender Spezifikation zu liefern.

Die Einschalt/Ausschalt-Steuerung wird derart vorgenommen, dass dann, wenn die Steuerung 111 bestimmt, dass der Ladeschalter geöffnet werden soll, der Umschalter 109 an die dem Öffnen des Ladeschalters 106 zugeordnete Ausgangsschiene, in Fig. 1 beispielsweise 116, verbunden wird, während dann, wenn der Ladeschalter 106 geschlossen werden soll, weil der Kondensator im Netzwerk 101 wieder nachgeladen werden soll, die Steuerung 111 den Umschalter 109 aktiviert, um nunmehr das Potential der oberen Ausgangsschiene 114 an den Steuereingang 107 des Ladeschalters 106 zu koppeln.

Fig. 2 zeigt ein bevorzugtes Ausführungsbeispiel der vorliegenden Erfindung, bei dem die Spule 100 mit der Diode 104 und dem Siebkondensator 102 verschaltet ist. Beim Vergleich von Fig. 2 und Fig. 7 wird ersichtlich, dass die Spule 100 nicht mehr, wie in Fig. 7, mit der Kathode der Diode 104 verbunden ist, sondern mit der Anode der Diode 104 verbunden ist. Ferner wird aus dem Vergleich von Fig. 2 und Fig. 7 ersichtlich, dass nunmehr die positive Ausgangsschiene 114 mit einem Zwischenknoten 118, über den der Ladeschalter 106 mit der Diode 104 verbunden ist, mit dem Ausgangsknoten 114, also der ersten Ausgangsschiene, zusammenfällt. Ferner ist in Fig. 2 ein Shunt-Widerstand $R_{Sh}$ 101 eingezeichnet, der zwischen die Spule 100 und die negative Ausgangsschiene 116 geschaltet ist. Ein Knoten 103 zwischen dem Shunt-Widerstand 101 und der Spule 100 wird auch als unterer Zwischenknoten bezeichnet.

Insbesondere ist der Ladeschalter 106 bei dem in Fig. 2 gezeigten Ausführungsbeispiel als selbstsperrender NMOS-Transistor ausgeführt, dessen Drain D mit dem ersten Eingangsknoten 110 verbunden ist, und dessen Source S zunächst mit einem Bulk-Anschluß B des Transistors kurzgeschlossen ist, und dessen Source S ferner direkt mit dem positiven Ausgangsknoten 114, also der positiven Ausgangsschiene gekoppelt ist. Die Kopplungseinrichtung 113 von Fig. 1 umfasst bei dem in Fig. 2 gezeigten Ausführungsbeispiel eine Zener-Diode $D_Z$ 113a, einen parallel geschalteten Kondensator $C_Z$ 113b sowie einen Vorschaltwiderstand $R_Z$ 113c. Der Vorschaltwiderstand dient dazu, um die eine Spannungsabfalleinrichtung bildende Parallelschaltung des Kondensators 113b und der Diode 113a über den ersten Eingangsknoten 110 mit Strom zu versorgen, wie es später noch dargelegt wird.

Für die Betriebsweise des in Fig. 2 gezeigten Schaltreglers bzw. überhaupt von Schaltreglern sind die transienten Charakteristika der Speicherelemente Spule L und Kondensator $C_S$ wichtig, da der Schaltregler, wie er in Fig. 2 gezeigt ist, eine Regelung der Ausgangsspannung durch ständiges Ein/Aus-Schalten des Ladeschalters 106 erreicht.

Eine Spule ist dadurch charakterisiert, dass die Spannung, die über der Spule abfällt, gleich der zeitlichen Ableitung des Stroms ist, der durch die Spule fließt. Entsprechend ist ein Kondensator dadurch gekennzeichnet, dass der Strom, der durch den Kondensator fließt, proportional zur zeitlichen Ableitung der an dem Kondensator liegenden Spannung ist.

Bezüglich der Spule ist ferner von großer Bedeutung, dass die an der Spule anliegende Spannung springen kann, dass jedoch der Strom durch die Spule nicht springen kann. Wird daher eine Spule eingeschaltet, also wird eine Gleichspannung (über einen Quelleninnenwiderstand) an die Spule angelegt, so steigt die Spannung an der Spule schlagartig auf den Wert der angelegten Gleichspannung an und fällt dann exponentiell ab. Gleichzeitig beginnt der Strom durch die Spule von seinem Ursprungswert 0 an langsam anzusteigen, bis er dann irgendwann einen Wert erreicht hat, der gleich dem Quotienten aus der angelegten Spannung und dem Innenwiderstand der Quelle ist. Wenn dieser stationäre Zeitpunkt erreicht ist, ist auch die über der Spule abfallende Spannung zu 0 geworden.

Entsprechend umgekehrt ist es beim Kondensator. Wird der Kondensator eingeschaltet, so steigt die Spannung an dem Kondensator langsam an, während der Strom durch den Kondensator springen kann.

Die Elemente Spule und Kondensator unterscheiden sich somit dadurch, dass der Strom durch den Kondensator springen kann, während die Spannung an der Spule springen kann. Die Spannung an dem Kondensator kann dagegen nicht springen. Dasselbe gilt auch für den Strom durch die Spule, er kann ebenfalls nicht springen. Dies führt dazu, dass zum Zeitpunkt des Einschaltens, also zum Zeitpunkt t = 0, wenn beim Zeitpunkt t = 0 das Einschalten stattfindet, die Spule als Leerlauf wirkt, während der Kondensator als Kurzschluß wirkt.

Nachfolgend wird auf das Ausschalten der Elemente Bezug genommen. Wird ein auf eine Gleichspannung aufgeladener Kondensator von der Gleichspannungsquelle abgetrennt, so passiert nichts. Er hält die Ladung, wenn er sich nicht über einen Widerstand entladen kann. Findet das Ausschalten des Kondensators jedoch über einen Kurzschluß statt, so führt dies dazu, dass ein sehr hoher Strom fließt, wobei zu diesem Zeitpunkt der Strom- und der Spannungs-Pfeil an dem Kondensator in entgegengesetzte Richtung zeigen. Der Kondensator arbeitet also, wenn er ausgeschaltet wird, als Generator.

Wird eine von einem Strom durchflossene Spule ausgeschaltet, so ist wieder von Bedeutung, wie die Spule ausgeschaltet wird. Wird eine Spule von einem Strom durchflossen, so existiert ein Magnetfeld, in dem Energie gespeichert wird. Wird eine Spule von der Quelle dadurch abgetrennt, dass zwischen Quelle und Spule ein Leerlauf ist, so würde der Strom durch die Spule eigentlich schlagartig auf 0 gebracht. Die in dem Magnetfeld der Spule gespeicherte Energie muss jedoch abfließen können. Daher führt ein Abschalten einer Spule durch Erzeugen eines Leerlaufs zwischen der Quelle und der Spule zu einer hohen Spannungsspitze, die dazu führt, dass sich an dem Schalter ein Lichtbogen bildet, über den die im Magnetfeld gespeicherte Energie zur Quelle abfließen kann. Aus diesem Grund wird eine Spule, um die theoretisch unendlich hohen Spannungsspitzen, die zerstörerisch wirken würden, zu vermeiden, über einen Widerstand, eine Diode oder einen Kondensator entladen. Dies führt zu einer Spannungsspitze mit reduzierter Höhe. Wird eine Spule ausgeschaltet, so zeigen wieder der Spannungs-pfeil und der Strompfeil in unterschiedliche Richtungen. Die Spule arbeitet somit als Generator.

Ist, wie es in Fig. 2 (oder Fig. 3a) gezeigt ist, die Spule in Serie zu einem Kondensator geschaltet, so ist zum Einschaltzeitpunkt, also wenn eine Spannung von 0 in eine Spannung mit einem bestimmten Gleichspannungswert umgeändert wird, der Kondensator ein Kurzschluß und die Spule ein Leerlauf. Somit liegt die gesamte eingeschaltete Spannung zunächst an der Spule an und sinkt dann mit zunehmendem Strom durch den Serienschwingkreis aus Spule und Kondensator ab. Zum Zeitpunkt des Ausschaltens einer Spannung an der Spule erzeugt die Spule noch einen Strom, der noch eine gewisse Zeit lang fließt, bis die in der Spule gespeicherte Energie (bzw. die in den Kondensator gespeicherte Energie) abgeflossen ist.

Die Funktionalität des Schaltreglers im stationären Zustand wird nachfolgend Bezug nehmend auf Fig. 2 beschrieben. Zum Zeitpunkt, zu dem der Schalter 106 geschlossen wird, liegt die volle Spannung $U_{Gl}$ 10, 12 an der Diode 104 an. Über den Schalter 106 und die Spule 100 fließt ein Strom, der den Kondensator 102 lädt. Das Potential der positiven Ausgangsschiene 114 steigt somit relativ zur negativen Schiene an.

Im Mittel ist der Strom durch die Spule 100 gleich dem Strom, der an die Last, die zwischen die positive Ausgangsschiene 114 und die negative Ausgangsschiene 116 angeschaltet ist, abgegeben wird.

Solange der Schalter aus ist, speist die Drossel über die Freilaufdiode den Kondensator. Solange der Drosselstrom größer ist als der Laststrom steigt die Spannung am Kondensator. Je mehr Energie nun von der Drossel auf den Kondensator übergeht, desto kleiner wird der Drosselstrom. Irgendwann wird der Drosselstrom kleiner als der Laststrom und ab diesem Zeitpunkt sinkt die Spannung am Kondensator.

Um ein zu weites Absinken der Spannung zu vermeiden, muss der Schalter wieder eingeschaltet werden., so dass der Drosselstrom wieder ansteigt. Allerdings ist der Drosselstrom zum Zeitpunkt des Einschaltens immer noch geringer als der Laststrom, so dass die Spannung am Kondensator zunächst weiter abnimmt. Bei leitendem Schalter nimmt der Drosselstrom nun jedoch wieder zu und wird irgendwann wieder größer als der Laststrom. Ab diesem Zeitpunkt nimmt die Spannung am Kondensator wieder zu. Wird nun der Strom durch die Drossel zu groß, dann wird der Schalter wieder gesperrt, und der Strom durch die Drossel wird wieder geringer. Der Zyklus beginnt nun wieder von vorne.

Zum Einschaltzeitpunkt wird der Knoten 118 auf das Potential des Knotens 110 gezogen. An der Diode 104 liegt folglich die volle Eingangsspannung $U_{GL}$. Da die Spannung $U_{SR}$ über die Kapazität $C_s$ nicht springen kann, wohl aber die Spannung über der Spule L, wird der Knoten 116 ebenfalls mit hoch gezogen, so dass die Spannung $U_{SR}$ konstant bleibt. An der Drossel L liegt in der Folge die Spannung $U_{GL} - U_{SR}$ an, so dass der Strom durch die Drossel entsprechend der Gleichung $dI_L/dt = (U_{GL} - U_{SR})/L$ zunimmt. Hierbei wurde der Spannungsabfall an Rsh vernachlässigt. Da nach dem Abschalten des Schalters 106 der Strom der Drossel nicht mehr durch die Quelle $U_{GL}$ und den Schalter 106 fließen kann, und die Drossel einen Sprung ihres Stromes verhindert, muss dieser Strom über die Freilaufdiode 104 weiterfließen. Dies führt jedoch dazu, dass das Potential des Knotens 118 entsprechend der Kenlinie dieser Diode auf ein Potential springt, da etwa 0,7 V unter dem Potential des Knotens 112 liegt. Der Kondensator $C_s$ verhindert wiederum einen Sprung der Spannung $U_{SR}$. Somit springt das Potential des Knotens 116 zum Ausschaltzeitpunkt auf -(0,7 V + $U_{SR}$). Folglich liegt an der Drossel (Knoten 103 - Knoten 112) eine negative Spannung an, so dass der Strom durch die Drossel 100 entsprechend der Gleichung $dI_L/dt = -(U_{SR} + 0,7 V)/L$ abnimmt.

Nachdem - in anderen Worten ausgedrückt - zum Zeitpunkt des Einschaltens des Schalters 106 die volle Spannung an der Diode 104 liegt, und nachdem, wie es vorstehend ausgeführt worden ist, die Spannung an dem Kondensator nicht springen kann, jedoch an der Spule springen kann, wird gleichzeitig zum Einschaltzeitpunkt auch das Potential der negativen Ausgangsschiene 116 angehoben.

Dadurch liegt an der Drossel 100 die volle Eingangsspannung an, wodurch ein Strom anfängt durch die Drossel 100 zu fließen, der somit auch den Kondensator 102 lädt. Ist die resultierende Spannung am Kondensator 102 hoch genug, dann wird die Steuerung 111 den Umschalter 109 betätigen, derart, dass er nicht mehr mit der positiven Ausgangsschiene 114 sondern mit der negativen Ausgangsschiene 116 verbunden ist. Dies führt dazu, dass der Transistor 106 sperrt, und dass kein Strom mehr von der Quelle 10, 12 in das Netzwerk aus Spule, Diode und Kondensator fließt. Dies führt dazu, dass die Spule als Generator wirkt, dahingehend, dass das Potential am Knoten 103 abfällt und die Spule einen Strom abgibt, der über die Diode 104 den Kondensator 102 weiter lädt, so dass nach dem Ausschalten des Schalters die Spannung $U_{SR}$ noch etwas weiter ansteigt. Dieser Anstieg wird durch den Strom, der über die Last fließt, gebremst und wird dann, wenn der durch die Last gezogene Strom kleiner wird als der Strom, den die Spule 100 an den Knoten 114 liefert, zu einem Spannungsabfall. Dieser Spannungsabfall wird immer größer, da die Spule irgendwann nicht mehr genug Strom nachliefert. Bevor die Spannung zu klein wird, greift die Steuerung wieder ein und verbindet den Umschalter 109 wieder mit der positiven Ausgangsschiene, was dazu führt, dass der Schalter 106 wieder geschlossen wird und Strom liefert. Aufgrund der vorstehend ausgeführten Zusammenhänge nimmt die Ausgangsspannung $U_{SR}$ nach dem Einschalten noch etwas weiter ab, bis der positive Knoten 114 des Kondensators "nachgezogen" hat und die Spannung $U_{SR}$ wieder ansteigt. Irgendwann wird die Steuerung wieder den Umschalter 109 betätigen, dass er mit der negativen Ausgangsschiene 116 verbunden ist, so dass der Transistor 107 gesperrt wird, was wiederum dazu führt, dass die Spannung noch etwas weiter ansteigt, und zwar aufgrund der in der Spule (und dem Kondensator) gespeicherten Energie, die zu einem Strom über die Diode 104 und in den positiven Knoten 114 führt.

Der in Fig. 2 gezeigte Schalter 106 ist bei diesem Ausführungsbeispiel als selbstsperrender NMOS-Transistor ausgeführt. NMOS-Transistoren leiten dann, wenn die Spannung zwischen dem Gate, also dem Steueranschluß 107 und der Source größer als eine eventuell vorhandene Schwellenspannung ist. NMOS-Transistoren, die selbstleitend sind, leiten bereits bei einer Spannung $U_{GS} > 0$. Bei dem in Fig. 2 gezeigten selbstsperrenden NMOS-Transistor muss dagegen die Spannung zwischen dem Gate 107 und der Source (Knoten 118 in Fig. 2) größer als das Negative des Betrags der Schwellenspannung $U_{th}$ des Transistors 106 sein. Aus diesem Grund umfasst die Kopplungseinrichtung 113 von Fig. 1 die in Fig. 2 gezeigten Elemente Vorschaltwiderstand 113c, Parallelkondensator 113b und Zener-Diode 113a.

Die Zener-Diode 113a ist derart konfiguriert, dass sie ab einer gewissen Durchbruchspannung, die fest konfiguriert ist, als Spannungsquelle wirkt, was anders ausgedrückt bedeutet, dass an der Parallelschaltung aus Kondensator 113b und Diode 113a immer die durch die Zener-Diode bestimmte Durchbruchspannung $U_Z$ abfällt. Ist der Umschalter 109 mit der positiven Schiene 114 verbunden, so liegt die an der Zener-Diode abfallende Spannung $U_Z$ direkt zwischen dem Gate und der Source des Transistors an. Der Steuereingang 107 des Transistors wird somit mit der positiven Ausgangsschiene über die Parallelschaltung aus Kondensator und Zener-Diode gekoppelt, dahingehend, dass der Transistor leitend wird.

Die einzige Randbedingung hierfür ist, dass die durch die Zener-Diode bestimmte Durchbruchspannung größer als die Schwellenspannung des Transistors ist. Diese Voraussetzung ist jedoch ohne weiteres zu erfüllen, da typischerweise Schwellenspannungen von Transistoren nicht besonders groß sind und Zener-Dioden mit verschiedenen definierten Durchbruchspannungen vorhanden sind. Ferner muss die Zener-Diode nur sehr lose auf den Transistor abgestimmt sein, da der Wert der Durchbruchspannung der Zener-Diode nur größer als die Schwellenspannung $U_{th}$ des Transistors sein muss. Damit sind die Anforderungen an die Schwellenspannung des Transistors 106 und an die Durchbruchspannung der Diode 113a hinsichtlich der benötigten Toleranz sehr niedrig.

Nachdem die Anforderungen an den Zusammenhang zwischen Schwellenspannung des Transistors und Durchbruchspannung der Diode jedoch sehr lose sind, können Abweichungen verfügbarer Transistoren in Kauf genommen werden, ohne dass eine Schaltung zum Ausschuss wird. Das erfindungsgemäße Konzept ist somit dahingehend besonders vorteilhaft, dass die Ausschussrate und damit die Kosten des Endprodukts gering gehalten werden können.

Stellt die Steuerung fest, dass der Schalter 106 wieder ausgeschaltet werden soll, so steuert sie den Wechselschalter 109 derart an, dass er mit der negativen Ausgangsschiene verbunden wird. Dies führt dazu, dass das Potential am Gate 107 des Transistors um $U_{SR}$ kleiner wird als im eingeschalteten Zustand. Dadurch wird der Transistor gesperrt.

Ein besonderer Vorteil der in Fig. 2 gezeigten erfindungsgemäßen Schaltung besteht darin, dass ein definiertes Anlaufen der Schaltung sichergestellt wird. Für das definierte Anlaufen ist es insbesondere zunächst gleichgültig, ob der Wechselschalter 109 zum Zeitpunkt des Einschaltens mit der positiven Ausgangsschiene 114 oder der negativen Ausgangsschiene 116 verbunden ist. Wenn der Umschalter 109 insbesondere als Multiplexer aus Transistoren oder als Inverter realisiert wird, ist es undefiniert, ob der Umschalter 109 mit der oberen Schiene 114 oder der unteren Schiene 116 verbunden ist, wenn davon ausgegangen wird, dass vor dem Einschalten die gesamte in Fig. 2 gezeigte Schaltung in spannungslosem Zustand war, dass also alle Potentiale in der Schaltung auf dem Wert 0 sind.

Von diesem Ausgangs-Zustand, bei dem alle Potentiale gleich 0 sind, wird nachfolgend ausgegangen, um einen Anlaufvorgang der Schaltung in Fig. 2 darzustellen. Nachdem alle Potentiale gleich 0 sind, ist auch das Potential zwischen dem Gate 107 und der Source 118 des Schalters gleich 0. Da der Transistor ein selbstsperrender Transistor ist, ist der Schalter zunächst gesperrt. Wird eine positive Spannung 10, 12 zwischen den ersten Eingangsknoten 110 und den zweiten Eingangsknoten 112, der typischerweise der Masseknoten sein wird, angelegt, so wird zunächst der Kondensator $C_Z$ 113b über den Vorwiderstand $R_Z$ aufgeladen, bis die Spannung an dem Kondensator $C_Z$ 113b und der dazu parallelen Z-Diode $D_Z$ die Schwellenspannung $U_{th}$ des Transistorschalters 106 erreicht. Hierfür ist es, wie es ausgeführt worden ist, unerheblich, ob der Umschalter 109 mit dem Knoten 114 oder dem Knoten 116 verbunden ist.

Ist der Umschalter 109 mit dem Knoten 114 verbunden, so fällt die Spannung $U_Z$ an dem Kondensator 113b ohnehin direkt zwischen dem Gate 107 und der Source 118 des Transistors ab.

Ist dagegen der Umschalter 109 mit der negativen Schiene 116 verbunden, so lädt sich der Kondensator 113b ebenfalls über den Vorwiderstand $R_Z$ auf. Das Potential am Knoten 118, das das Source-Potential des Transistors bestimmt, wird jedoch zunächst nicht aus seinem 0-Wert gebracht, da noch keine Ladung des Kondensators 102, durch die das Potential 118 angehoben werden könnte, stattfindet, da der Umschalter 109 mit der negativen Schiene 116 verbunden ist.

In beiden Fällen des Schalters 109 steigt somit die Gate-Source-Spannung von einem Wert von 0 zum Zeitpunkt des Einschaltens der Quelle 10, 12 durch Betätigen des Schalters 14 in Fig. 1 auf einen Wert an, der gleich der Schwellenspannung des Transistors ist. Sobald dies der Fall ist, wird die Drain-Source-Strecke dieses Schalters 106 leitfähig, und der Kondensator $C_S$ wird (unabhängig von der Stellung des Schalters 109) aufgeladen. Der Ladestrom für den Kondensator 102 ($C_S$) fließt gleichzeitig über die Spule 100 zur Masse 112. Dies führt unmittelbar dazu, dass die Ausgangsspannung $U_{SR}$ aufgrund der Zunahme des Potentials an der positiven Ausgangsschiene 114 gegenüber dem Potential an der negativen Ausgangsschiene 116 zunimmt. Dieser Aufladevorgang setzt sich fort, bis die Spannung am Kondensator $C_S$ die Spannung an der Z-Diode minus der Schwellenspannung des Schalters 106 erreicht.

Würde der Umschalter 109 mit der positiven Ausgangsschiene 114 verbunden sein, so würde der Ladevorgang immer weiter fortgesetzt, da der Transistor 106 geöffnet ist. Ist der Umschalter 109 dagegen mit der negativen Schiene 116 verbunden, so wird der Schalter dann wieder geschlossen, wenn das Potential zwischen Gate und Source gleich der Schwellenspannung ist. Wenn angenommen wird, dass das Potential an der Source gleich $U_{SR}$ ist, und wenn angenommen wird, dass das Potential am Gate des Transistors gleich dem Spannungsabfall an der Zener-Diode $U_Z$ ist, so ergibt sich ein Wert $U_{SR}$ am Ausgang des Schaltreglers, bei dem der Transistor wieder sperrt, als Differenz zwischen der Spannung an der Zener-Diode und der Schwellspannung. Würde nichts weiter unternommen, so würde der Transistor wieder schließen und die Ausgangsspannung würde auf $U_{SR} = U_Z - U_{th}$ verharren.

Durch Dimensionierung der Zener-Diode 113a ist dieser "Verharrungswert" der Ausgangsspannung $U_{SR}$ relativ frei wählbar. Bei einem bevorzugten Ausführungsbeispiel der Erfindung wird die Zener-Diode so dimensioniert, dass $U_{SR}$ so groß wird, (wenn im "ungünstigen Fall" der Wechselschalter 109 zum Hochfahren mit der negativen Schiene 116 verbunden ist), dass die Steuerung 111, die vorzugsweise von $U_{SR}$ versorgt wird, bereits arbeiten kann. Die Spannung $U_{SR}$ wird somit durch Dimensionierung der Zener-Diode (und der Schwellenspannung) so groß gemacht, dass bei Anliegen dieser Spannung an der Steuerung die Zustände an den Knoten in der Steuerung bereits definiert sind.

Die Steuerung wird daher einen Wert $U_{SR}$ erfassen und mit einem Grenzwert vergleichen. Sobald die Steuerung feststellt, dass $U_{SR}$ beim Hochfahren den vorbestimmten Zustand erreicht hat, ist die Steuerung 111 wirksam, um sicherzustellen, dass der Umschalter 109 mit der positiven Schiene 114 verbunden ist. War dies bereits beim Anlauf der Fall, so führt die Steuerung 111 hier keine Veränderung des Umschalters 109 durch. War dies jedoch nicht der Fall, also war zum Zeitpunkt des Hochfahrens der Umschalter 109, wie in Fig. 2 gezeigt, mit der negativen Schiene 116 verbunden, so wird die Steuerung den Umschalter 109 derart ansteuern, dass nunmehr nicht mehr die negative Schiene 116 an den Steueranschluß 107 gekoppelt ist, sondern dass die positive Schiene 114 an den Steuereingang 107 gekoppelt ist. Damit liegt an der Anode der Z-Diode das Potential der positiven Ausgangsschiene. Hierdurch steigt die Spannung an dem Sieb-Kondensator $C_S$ 102 aufgrund des durch den Ladeschalter 106 fließenden Ladestroms weiter an, bis eine gewünschte Ausgangsspannung an $C_S$ anliegt. Nun folgt die eigentliche Spannungsregelung, indem der Wechselschalter 109 durch die Steuerung 111 hin- und hergeschaltet wird, um den Schalter T ein- bzw. auszuschalten, und um dadurch die Ausgangsspannung $U_{SR}$ nach Spannungs- und Strom-Bedarf einer Last (in Fig. 2 nicht gezeigt) zu regeln.

Die in Fig. 2 gezeigte Schaltung ist somit insbesondere dahingehend vorteilhaft, dass sie definiert hochfährt, wobei es zum Zeitpunkt des Hochfahrens unerheblich ist, in welcher Stellung der Schalter 109 steht. Ferner wird es bevorzugt, die Steuerung 111 derart zu dimensionieren, dass sie bereits dann definiert arbeitet, wenn die Ausgangsspannung gleich der Zener-Dioden-Spannung $U_Z$ minus der Schwellenspannung des Transistors 107 ist. Damit kann ohne eigene Versorgung für die Steuerung 111 der Hochfahrvorgang definiert fortgesetzt werden. Dies führt insbesondere zu einer preisgünstigen Schaltung, da keine speziellen Hochfahr-Maßnahmen getroffen werden müssen, außer der Sicherstellung, dass der Wechselschalter 109 mit der positiven Schiene 114 verbunden ist. Nachdem keine speziellen Maßnahmen erforderlich sind und insbesondere Spannungsüberprüfungen im Hinblick auf die Steuerung 111 etc. durchgeführt werden müssen, findet der Hochfahrvorgang sehr schnell statt.

Des weiteren sei darauf hingewiesen, dass der Spannungsanstieg durch entsprechende Dimensionierung des Widerstands 113c und des Kondensators 113b sehr schnell dimensioniert werden kann. So wird es ohnehin bevorzugt, den Widerstand 113c relativ groß zu dimensionieren, damit die durch ihn erzeugte Verlustleistung nicht in erhebliche Größenordnungen kommt. Ferner wird es bevorzugt, den Kondensator $C_Z$, der ohnehin nur zur Stabilisierung der Zener-Diode 113a bzw. zu deren (kleiner) Sperrschichtkapazität dient, ebenfalls klein zu dimensionieren, damit er schnell auf die Spannung $U_Z$ aufgeladen wird. Das Hochfahren findet somit derart statt, dass keine Zeitkonstanten berücksichtigt werden müssten, die das Hochfahren des Schaltreglers deutlich abbremsen würden.

Fig. 3a zeigt ein alternatives Ausführungsbeispiel, das sich von Fig. 2 dahingehend unterscheidet, dass der Transistor T 106 nunmehr ein selbstleitender NMOS-Transistor ist, und dass die Kopplungseinrichtung 113 von Fig. 1, die in Fig. 2 durch die Elemente 113a, 113b, 113c realisiert war, in Fig. 3a durch eine einfache Kopplung 113d realisiert ist. Während in Fig. 2 das Potential an der ersten Ausgangsschiene oder der zweiten Ausgangsschiene über die Kopplungseinrichtung 113 mit einem Spannungsabfall beaufschlagt worden ist, wird in Fig. 3a das Potential an der ersten Ausgangsschiene 114 oder der zweiten Ausgangsschiene 116 durch eine einfache Verbindung unmittelbar mit dem Steueranschluß 107 des Schalters 106 gekoppelt. Der Transistor 106 ist als selbstleitender n-Kanal-MOS-FET oder n-Kanal-JFET ausgeführt. Die Beschaltung des Transistors, der den Ladeschalter 106 bildet, bezüglich Drain und Source ist identisch zu dem Fall von Fig. 2.

Die Spannungsquelle bzw. Spannungsabfalleinrichtung aus der Z-Diode mit dem Vorwiderstand und dem parallelen Kondensator von Fig. 2 entfällt dagegen bei Fig. 3a, um eine unmittelbare Potentialkopplung von einer Ausgangsschiene an den Steueranschluß 107 und des Schalters zu erreichen. Vorzugsweise wird die Schwellen-Spannung des Transistors $U_{Th}$ so dimensioniert, dass sie gleich der Z-Spannung der Z-Diode minus der Schwellen-Spannung des selbstsperrenden MOS-FETs im ersten Fall ist, damit die Ausgangsspannung $U_{SR}$ im Hochfahrvorgang einen solchen Wert erreicht, durch den die Steuerung 111 bereits betreibbar ist, um zu einem bestimmten Zeitpunkt des Hochfahrvorgangs den Umschalter 109 derart ansteuern zu können, dass er definiert mit der positiven Schiene 114 verbunden ist.

Schwellenspannungen bei selbstleitenden NMOS-Transistoren oder N-JFET-Transistoren sind dahingehend definiert, dass sie eine negative Spannung zwischen Gate und Source des Transistors definieren, bei der der Transistor 106 gerade sperrt. Spannungen, die höher als die negative Schwellenspannung sind, führen dann dazu, dass der Transistor leitet, während Spannungen, die noch negativer als die Schwellenspannung sind, dazu führen, dass der Transistor sperrt.

Im nachfolgenden wird der Hochfahrvorgang der in Fig. 3a gezeigten Schaltung erläutert. Wieder wird davon ausgegangen, dass im Ausgangszustand alle Potentiale gleich 0 sind. Damit leitet der Schalter (er ist selbstleitend ausgeführt), was dazu führt, dass das Potential an der Ausgangsschiene 114 angehoben wird. Es sei darauf hingewiesen, dass zum Zeitpunkt des Einschaltens zunächst sowohl der Knoten 114 als auch der Knoten 116 auf das Gleichspannungspotential angehoben werden, dass jedoch die Potentialdifferenz zwischen den Knoten gleich 0 ist. Die beiden Knoten 114 und 116 werden schlagartig angehoben, da der Kondensator, wie es ausgeführt worden ist, zum Zeitpunkt des Einschaltens einer Gleichspannung als Kurzschluß wirkt. Erst dann, wenn Ladung auf den Knoten 114 über den Ladeschalter 106 geliefert wird, entsteht eine Potentialdifferenz zwischen dem Knoten 114 und dem Knoten 116, die dazu führt, dass die Ausgangsspannung $U_{SR}$ von 0 V auf Werte größer als 0 V ansteigt. Nach dem Einschalten der Spannung wird somit der Kondensator 102 über den Transistor, der selbstleitend ist, aufgeladen.

Würde der Wechselschalter 109, der wieder derart ausgeführt sein kann, dass sein Anfangszustand undefiniert ist, mit der positiven Schiene 114 verbunden sein, so würde der Ladevorgang immer weiter fortgesetzt werden, da Gate und Source des Transistors kurzgeschlossen sind, derart, dass $U_{GS}$ gleich 0 V ist, was beim selbstleitenden Transistor immer einen leitfähigen Zustand zwischen Drain und Source bedeutet. Würde dagegen der Umschalter 109 mit der negativen Schiene verbunden sein, so würde der Ladezustand irgendwann aufhören, da das Source-Potential, also das Potential der positiven Schiene 114 immer weiter zunimmt. Wenn das Source-Potential größer als die Schwellenspannung ist, wird der Transistor geschlossen und die Ausgangsspannung $U_{SR}$ steigt nicht mehr weiter an. Daher wird, wie es ausgeführt worden ist, die Schwellenspannung des Transistors 106 derart gewählt, dass eine dann am Ausgang anliegende Ausgangsspannung $U_{SR}$ bereits ausreichend hoch ist, um die Steuerung 111, die mit der Spannung $U_{SR}$ versorgt wird, definiert arbeiten zu lassen, damit dieselbe dann den Umschalter 109 von der negativen Schiene 116 trennt und mit der positiven Schiene 114 verbindet, damit der Transistor wieder geöffnet ist, so dass der Ladevorgang des Kondensators 102 weiter fortgesetzt werden kann, bis die Steuerung 111 in den normalen Betrieb übergeht und eine Schaltersteuerung aufgrund einer tatsächlichen gewünschten Ausgangsspannung $U_{SR}$ vornimmt.

Zusammenfassend ist der Hochfahrvorgang in Fig. 3a somit derart, dass zunächst der Schalter T leitet. Nach Anlegen einer positiven Eingangsspannung $U_{GI}$ an den Eingang der Schaltung wird der Kondensator 102 über den Schalter T und die Drossel L aufgeladen, bis die Spannung am Kondensator $C_S$ die Schwellenspannung des Schalters T erreicht (wenn der Umschalter 109 mit der negativen Schiene 116 verbunden war). Dann ist die Spannung am Ausgang der Schaltung $U_{SR}$ bereits so groß, dass ein kontrolliertes Arbeiten des Reglers gewährleistet ist. Dieser schaltet nun den Wechselschalter $S_W$ so, dass am Gateanschluß des Schalters die positive Schiene der Ausgangsspannung $U_{SR}$ anliegt. Dadurch steigt die Spannung an $C_S$ weiter an, bis die gewünschte Ausgangsspannung an $C_S$ anliegt. Nun folgt die eigentliche Spannungsregelung. Durch Umschalten des Wechselschalters $S_W$ durch die Regelschaltung 111 wird der Schalter T ein- und ausgeschaltet, wodurch die Ausgangsspannung $U_{SR}$ geregelt wird.

Bezüglich der Dimensionierung der Schwellenspannung des Transistors 106 im Fall von Fig. 3a bzw. der Schwellenspannung des Transistors 106 und der Zener-Diodenspannung $U_Z$ von Fig. 2 sei darauf hingewiesen, dass diese Wert so dimensioniert werden, dass die Steuerung 111 bei der automatisch ohne Eingriff in die Schaltung und bei vorausgesetzter Stellung des Wechselschalters 109 auf der negativen Schiene 116 erreichte maximale Ausgangsspannungswert $U_{SR}$, der sich ohne irgendeine Intervention von selbst ergibt, bereits so groß ist, dass die Steuerung mit $U_{SR}$ versorgt werden kann.

Wird die Steuerung 111 bzw. werden die Schwellenspannung bzw. die Schwellenspannung und die Zener-Diodenspannung derart dimensioniert, dass die Ausgangsspannung $U_{SR}$, die "automatisch" erreicht wird, bereits etwas höher ist als die Spannung, bei der die Steuerung 111 definiert arbeitet, so kann die Steuerung 111 auch derart ausgestaltet sein, um sofort, wenn sie definiert arbeiten kann, also wenn die Eingangsspannung ausreichend groß ist, den Umschalter 109 nach oben, also auf die positive Ausgangsschiene zu legen. So ist der Umschaltzeitpunkt nicht darauf begrenzt, dass immer die maximale automatisch erreichbare Ausgangsspannung vorliegen muss, um den Schalter umzuschalten. Statt dessen ist es erforderlich, dass irgendwann im Hochfahrvorgang sichergestellt wird, dass der Umschalter mit der positiven Ausgangsschiene 114 verbunden ist.

Würde dagegen eine Steuerung verwendet werden, die unabhängig von $U_{SR}$ arbeitet, so könnte von vornherein, also bereits z. B. zum Zeitpunkt des Einschaltens der Gleichspannung $U_{GI}$ sichergestellt werden, dass der Schalter 109 mit der positiven Schiene 114 verbunden ist. Aufgrund der Einfachheit der Schaltung wird es jedoch bevorzugt, dass die Steuerung 111 von der Ausgangsspannung $U_{SR}$ versorgt wird, wobei in diesem Fall bei der Dimensionierung des Transistors und gegebenenfalls der Diode eher an die Grenze gegangen wird, dahingehend, dass z. B. 90% der sich maximal einstellenden Ausgangsspannung $U_{SR}$ bis zum Umlegen des Wechselschalters 109 verwendet werden, damit auch die Anforderungen an die Steuerung möglichst gering werden, da typischerweise Schaltungen, die mit geringeren Spannungen bereits einsatzfähig sind, mit den sonstigen Spannungsniveaus der in Fig. 2 und 3a gezeigten Schaltungen eher nicht kompatibel sind, so dass eine möglichst hohe automatisch sich einstellende Ausgangsspannung $U_{SR}$ bevorzugt wird.

Bei den in den Fig. 2 und 3a gezeigten Ausführungsbeispielen wird die Spule nicht, wie in Fig. 7, mit der Kathode der Diode gekoppelt, sondern mit der Anode. Dies hat den Vorteil, dass dann, wenn der Umschalter 109 mit der positiven Schiene 114 verbunden ist, das Potential, das zwischen Gate und Source des Transistors erzeugt wird, nicht durch die transienten Charakteristika der Spule beeinträchtigt wird. Die Spule kann bei einem anderen Ausführungsbeispiel auch mit der Diode kathodenseitig gekoppelt sein, derart, dass dann die Umschalteinrichtung 109, wenn sie die positive Schiene mit dem Transistorgate 107 verbindet, gewissermaßen die Spule mit dem Gate des Transistors entweder direkt koppelt oder kurzschließt oder über eine Spannungsabfalleinrichtung indirekt koppelt.

Ein Anordnen der Spule anodenseitig zur Diode hat ferner den Vorteil, dass dann die Eingangsspannung der Schaltung nur durch die Spannungsfestigkeit der drei Elemente Schalter, Diode und Drossel begrenzt. Ferner versorgt sich der Schaltregler selbst und läuft definiert hoch. Das Springen des Gleichtaktpotentials der Ausgangsspannung zwischen der positiven und der negativen Schiene der Eingangsspannung je nach Zustand des Schalters T ist für die Last nicht von primärer Bedeutung, da sie von diesem Springen nichts merkt, da die Last lediglich die Potentialdifferenz zwischen der oberen Ausgangsschiene und der unteren Ausgangsschiene erfährt, jedoch nicht das "absolute" Potential der positiven Ausgangsschiene bzw. der negativen Ausgangsschiene für sich.

Wie es bereits ausgeführt worden ist, ist die Anlaufzeit selbst durch die Dimensionierung von $R_Z$ und $C_Z$, die Induktivität der Drossel L und die Kapazität des Sieb-Kondensators $C_S$ definiert. Eine zusätzliche Anlauf-Verzögerung zur Sicherstellung der Spannungs-Versorgung des Reglers wird nicht benötigt.

Ferner sei darauf hingewiesen, dass durch das erfindungsgemäße Konzept der Eingangsspannungs-Bereich, der üblicherweise auf ein Eingangsspannungs-Verhältnis von $U_{E,max}/U_{E,min} \leq 5{:}1$ beschränkt ist, erfindungsgemäß auf mindestens 50:1 erhöhbar ist, so lange die Spannungsfestigkeit der Diode, der Spule und des Schalters entsprechend mitgeführt wird, da diese Elemente durch die Eingangsspannung beaufschlagt werden. Dagegen werden weder der Kondensator noch der Umschalter noch die Steuerung mit derart hohen Spannungen beaufschlagt, so dass für diese Elemente die maximale Eingangsspannung nicht berücksichtigt werden muss, was wiederum zu einem preisgünstigeren und gleichzeitig flexibleren Schaltreglerkonzept gemäß der vorliegenden Erfindung führt.

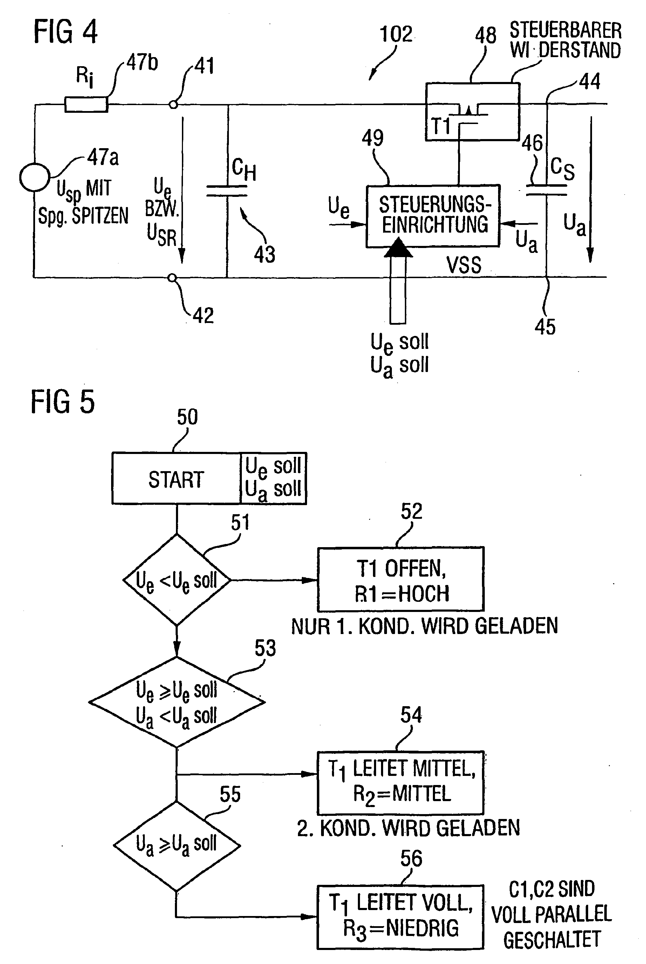

Fig. 4 zeigt eine erfindungsgemäße Schaltung mit einem ersten Eingangsknoten 41 und einem zweiten Eingangsknoten 42, zwischen denen eine erste Kapazität 43 geschaltet ist. Die in Fig. 4 gezeigte Schaltung hat ferner einen ersten Ausgangsknoten 44 und einen zweiten Ausgangsknoten 45, zwischen denen eine zweite Kapazität 46 geschaltet ist. Zwischen die Eingangsknoten 41, 42 wird eine Speisespannung mit einer Spannungsspitze angelegt, die in Fig. 4 lediglich modellhaft als Spannungsquelle 47a mit einem Innenwiderstand 47b skizziert ist. Zwischen den ersten Eingangsknoten 41 und den ersten Ausgangsknoten 44 ist ferner einer steuerbarer Widerstand 48 geschaltet, der von einer Steuerungseinrichtung 49 steuerbar ist. Die Steuereinrichtung 49 erhält vorzugsweise einen Eingangsspannungs-Sollwert $U_{esoll}$ und einen Ausgangsspannungs-Sollwert $U_{asoll}$. Ferner erhält die Steuerungseinrichtung 49 bei einem bevorzugten Ausführungsbeispiel der vorliegenden Erfindung den aktuellen Wert der Eingangsspannung $U_e$ sowie den aktuellen Wert der Ausgangsspannung $U_a$. Es sei darauf hingewiesen, dass die Sollwerte in der Steuerungseinrichtung 49 fest einprogrammiert sein können. Ferner sei darauf hingewiesen, dass die beiden Sollwerte $U_{esoll}$ und $U_{asoll}$ gleich oder unterschiedlich sein können. Sollten sie unterschiedlich sein, so wird es bevorzugt, dass der Ausgangsspannungs-Sollwert $U_{asoll}$ größer als der Eingangsspannungs-Sollwert $U_{esoll}$ ist.

Bei einem bevorzugten Ausführungsbeispiel liegen die Knoten 42 und 45 auf demselben Potential.

Ist der ungefähre zeitliche Verlauf einer Spannungsspitze der Speisespannung 47a vorbekannt, was in bestimmten Anwendungen, wie beispielsweise in einem Schaltregler sein kann, so kommt die Steuerungseinrichtung 49 ohne den aktuellen Eingangsspannungswert $U_e$ oder $U_a$ aus. Statt dessen kann sie eine entsprechende Zustandsmaschine oder eine andere Einrichtung haben, um den Widerstand 48 gemäß einem vorbestimmten Zeitablauf von einem hohen Widerstandswert vorzugsweise monoton fallend auf einen niedrigen Widerstandswert durchzusteuern. Ist der Zeitverlauf der Spannungsspitze nicht unmittelbar bekannt, so wird es bevorzugt, einen Sollwert/Istwert-Vergleich der Eingangsspannung und/oder der Ausgangsspannung durchzuführen.

Unabhängig davon, ob tatsächlich in der Steuerungseinrichtung 49 ein Sollwert/Istwert-Vergleich oder ein voreingestellter Zeitablauf zur Steuerung des Widerstands etc. durchgeführt wird, ist die Steuerungseinrichtung ausgebildet, um in einem ersten Fall, in dem die Eingangsspannung $U_e$ kleiner als der vorbestimmte Eingangsspannungs-Sollwert $U_e$ ist, den steuerbaren Widerstand so anzusteuern, dass der steuerbare Widerstand einen ersten hohen Widerstandswert $R_1$ hat, wie es in einem Block 52 in Fig. 5 gezeigt ist. Der Vergleich der tatsächlichen Eingangsspannung $U_e$ und dem Eingangsspannungs-Sollwert $U_{esoll}$ ist durch einen Block 51 in Fig. 5 dargestellt, der dann angesprochen wird, wenn in einem Startblock 50 die Steuerungseinrichtung 49 von Fig. 4 aktiviert wird und die entsprechenden Sollwerte bereitgestellt hat. Die Steuerungseinrichtung ist ferner ausgebildet, um in einem zweiten Fall, in dem die Eingangsspannung größer als der vorbestimmte Eingangsspannungs-Sollwert ist, und in dem die Ausgangsspannung kleiner als der Ausgangsspannungs-Sollwert ist, was normalerweise der Fall sein wird, da die Speisespannung einen monoton steigenden Verlauf bis zur Spannungsspitze hat, den steuerbaren Widerstand 48 von Fig. 4 so anzusteuern, dass der steuerbare Widerstand einen zweiten niedrigeren Widerstandswert hat, wie es in einem Block 54 dargestellt ist. Ob der zweite Fall vorliegt oder nicht, wird durch einen Entscheidungsblock 53 bestimmt. In dem zweiten Fall ist das "Schließen" des steuerbaren Widerstands 48 auf einen mittleren Widerstandswert derart wirksam, dass eine Ladungsaufnahme der ersten Kapazität 43 zumindest reduziert wird, und dass mehr Ladung in die zweite Kapazität 46 fließt als in dem Fall, in dem der steuerbare Widerstand den hohen Widerstandswert hat, also in dem ersten Fall.

Die Steuerungseinrichtung 49 ist ferner ausgebildet, um in einem dritten Fall, der durch einen Entscheidungsblock 55 ermittelt wird, und der darin besteht, dass die Ausgangsspannung größer oder gleich dem Ausgangsspannungs-Sollwert ist, den steuerbaren Widerstand 48 so anzusteuern, dass derselbe einen dritten niedrigen Widerstandswert hat, damit die erste und die zweite Kapazität über den dritten niedrigen Widerstandswert parallel geschaltet werden, wie es in einem Block 56 in Fig. 5 dargestellt ist. Wird, wie es bereits ausgeführt worden ist, als steuerbarer Widerstand 48 ein Transistor $T_1$ verwendet, wie es in Fig. 4 gezeigt ist, so wird der hohe Widerstandswert $R_1$ aus Block 52 in Fig. 5 durch Sperren des Transistors erreicht, während der niedrige Widerstandswert $R_3$ durch Durchschalten des Transistors $T_1$ unter Verwendung einer entsprechenden Gatespannung sichergestellt wird. Der mittlere Widerstandswert wird durch Betreiben des Transistors im Triodenbereich erreicht.

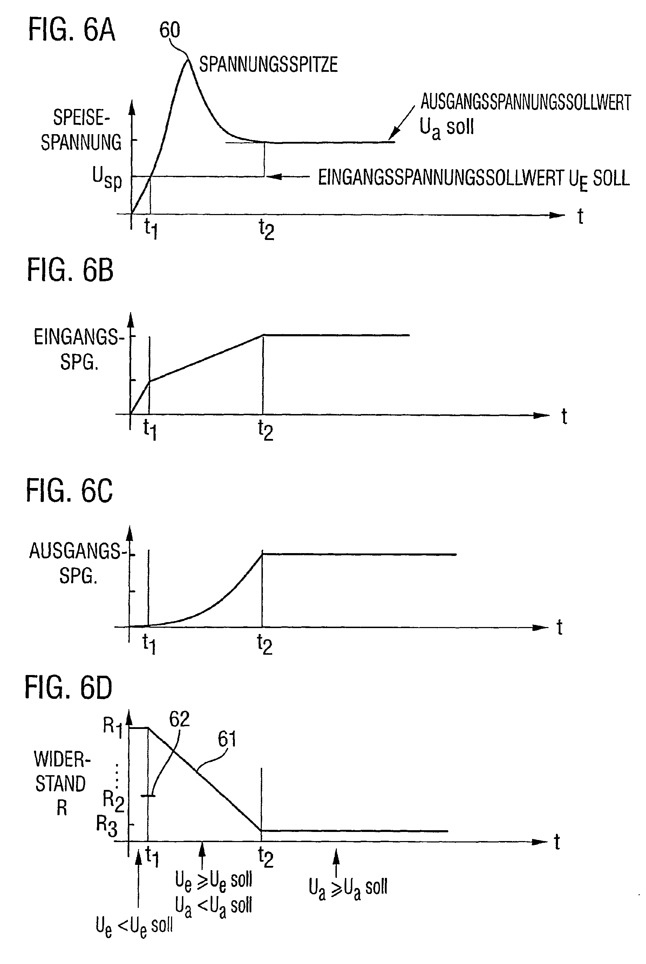

Nachfolgend wird Bezug nehmend auf die Fig. 6a bis 6d auf die Funktionalität der in Fig. 4 gezeigten Schaltung hingewiesen. Es sei betont, dass die Zeitverläufe in Fig. 6a bis 6d lediglich skizzenhaft sind, um die Funktionalität der erfindungsgemäßen Schaltung zu erläutern. So können tatsächliche Schaltungsverläufe stark von den in den Fig. 6a bis 6d gezeigten Zeitverläufen abweichen. In Fig. 6a ist beispielhaft ein Speisespannungs-Zeitverlauf mit einer Spannungsspitze 60 gezeigt. Ferner sind in Fig. 6a der Eingangsspannungs-Sollwert $U_{esoll}$ und der Ausgangsspannungs-Sollwert $U_{asoll}$ eingezeichnet. Bezug nehmend auf Fig. 6b folgt die Eingangsspannung im Zeitraum zwischen t = 0 bis t = $t_1$ der Speisespannung, da der Widerstandswert des steuerbaren Widerstands 48, der in Fig. 6d mit $R_1$ bezeichnet ist, sehr hoch ist. Dann, zum Zeitpunkt $t_1$ wird der Widerstandswert reduziert, wie es durch eine fallende Flanke bei 61 in Fig. 6d gezeigt ist. Dies führt dazu, dass Ladung, die aufgrund der Speisespannung bewegt wird, nicht mehr ausschließlich in den ersten Kondensator 43 fließt, sondern über den gesteuerten Widerstand in die zweite Kapazität 46. Dies führt dazu, dass die Ausgangsspannung an der zweiten Kapazität 46 zwischen dem Zeitpunkt $t_1$ bis zu einem Zeitpunkt $t_2$ ansteigt, da immer mehr Ladung in die zweite Kapazität 46 fließt. Aufgrund der Öffnung des steuerbaren Widerstands 48 zwischen $t_1$ und $t_2$ steigt die Eingangsspannung $U_e$ nicht mehr genauso an wie die Spannungsspitze sondern erheblich langsamer. Bei einer entsprechenden Steuerung durch die Steuerungseinrichtung 49 kann auch bewirkt werden, dass die Eingangsspannung im wesentlichen auf dem Eingangsspannungs-Sollwert $U_{esoll}$ bleibt.

Auf jeden Fall ist aufgrund der Fig. 6b und 6c zu sehen, dass die Spannungsspitze 60 in Fig. 6a weder auf die Eingangsspannung $U_e$ noch auf die Ausgangsspannung $U_a$ durchschlägt, sondern dass die in der Spannungsspitze 60 gespeicherte Energie vollständig zur schnellen Aufladung des üblicherweise großen zweiten Kondensators 46 vorteilhaft eingesetzt wird.

Je nach Steuerung des steuerbaren Widerstands 48 können die Zeitverläufe der Eingangsspannung und der Ausgangsspannung beeinflusst werden. Wird der Widerstand zwischen dem Zeitpunkt $t_1$ und dem Zeitpunkt $t_2$ nicht monoton auf einen sich über der Zeit ändernden zweiten Widerstandwert umgeschaltet, sondern lediglich zum Zeitpunkt $t_1$ auf einen Widerstandswert 62, auf dem der steuerbare Widerstand dann bis zum Zeitpunkt $t_2$ bleiben würde, so würde dies darin resultieren, dass die Eingangsspannung zum Zeitpunkt $t_1$ im Vergleich zum Eingangsspannungs-Sollwert etwas abfällt, während die Ausgangsspannung zum Zeitpunkt $t_1$ einen Sprung machen würde. Die Eingangsspannung würde dann wieder ansteigen, den Eingangsspannungs-Sollwert überschreiten und schließlich einen Wert erreichen, der durch die Wahl von $R_2$ 62 in Fig. 6d vorgegeben ist.

Erfindungsgemäß werden die Dimensionierung von $R_2$ 62 bzw., wenn ein monoton fallender Widerstandswertverlauf gewünscht ist, die Form und Steilheit der Flanke 61 derart gewählt, dass die Eingangsspannung vorzugsweise nicht mehr als um einen Toleranzbereich von z. B. 20% unter den Eingangsspannungs-Sollwert steigt, da, wie später noch erläutert werden wird, die Eingangsspannung $U_e$ verwendet wird, um die Steuerung 111 der Fig. 1 bis 3a mit Spannung zu versorgen, so dass ein Anlaufvorgang des in den Fig. 1 bis 3a gezeigten Schaltreglers definiert und schnell abläuft. Hierfür ist es nicht entscheidend, ob die Eingangsspannung steil oder flach zwischen dem Zeitpunkt $t_1$

und dem Zeitpunkt $t_2$ ansteigt, so lange die Spannungsanforderungen der Steuerung 111, die mit der Eingangsspannung $U_e$ versorgt wird, erfüllt sind. Selbstverständlich kann die Flanke 61 in Fig. 6d auch durch eine Stufenfunktion oder durch irgend eine andere beispielsweise quadratische oder kubische kontinuierlich oder stufenartig geformte Funktion ersetzt werden, je nach Vorliegen der Gegebenheiten. Immer wird sichergestellt sein, dass die Spannungsspitze 60 nicht sowohl auf die Eingangsspannung als auch auf die Ausgangsspannung voll durchschlägt.

Es wird ferner bevorzugt, die beiden Kondensatoren so zu dimensionieren, dass sie in der Lage sind, die gesamte Energie der Spannungsspitze 60 aufzunehmen. Kommt eine besonders hohe Spannungsspitze mit besonders viel Energie, und sind die Kondensatoren nicht ausreichend dimensioniert, so erreichen sie dennoch bereits eine Abmilderung der Spannungsspitze, obgleich eine vollständige Eliminierung der Spannungsspitze bevorzugt wird. Wenn die in Fig. 4 gezeigte erfindungsgemäße Schaltung als Kapazität 102 in dem in Fig. 2 gezeigten Schaltregler eingesetzt wird, ist dies typischerweise kein Problem, da der Kapazitätswert, der durch die Parallelschaltung der beiden Kondensatoren 43 und 46 realisiert wird, ohnehin beträchtliche Größenordnungen annimmt, die ohne weiteres genügen, um auch sehr hohe Spannungsspitzen zu "absorbieren".

Das in den Fig. 2 und 3a gezeigte Schaltungskonzept ist insbesondere problematisch und kann besonders gut durch die in Fig. 4 gezeigte Schaltung ergänzt werden, da insbesondere bei großen Eingangsspannungen 10, 12 in Fig. 2 oder Fig. 3a zu dem Zeitpunkt, zu dem der Schalter 109 während des Hochfahrens angesteuert wird, um mit der positiven Ausgangsschiene 114 verbunden zu sein, dies dazu führt, dass der Ladestrom für den Kondensator 102, der gleich dem Strom durch die Spule 100 ist, gewissermaßen ausgeschaltet wird. Im Fall von Fig. 2 kommt ferner noch hinzu, dass aufgrund der Tatsache, dass die Zener-Diode im Durchbruch betrieben wird, der kleine im Bereich von 10 μA liegende Dioden-Durchbruchstrom ebenfalls durch die Spule 100 zur Masse 112 fließt. Wird also während des Hochlauf-Vorgangs nach dem Erreichen der sich maximal automatisch einstellbaren Spannung $U_{SR}$ der Schalter 109 umgelegt, so wird wegen der in der Spule 100 gespeicherten Energie eine Spannungsspitze erzeugt werden, die den Knoten 103 zum Zeitpunkt der Spitze stark negativ macht, wobei diese zusätzliche Differenz erst dadurch ausgeglichen wird, dass der Strom von der Spule über die dann in Flussrichtung betriebene Diode 104 den Kondensator 102 lädt. Diese Spannungsspitze in $U_{SR}$ könnte ohne weitere Vorkehrungen dazu führen, die Steuerung 111, wenn sie von $U_{SR}$ versorgt wird, zu zerstören.

Um dies zu verhindern, wird der Kondensator 102 in den Fig. 2 und 3a erfindungsgemäß durch die in Fig. 4 gezeigte Anordnung aus zwei Kapazitäten samt steuerbarem Widerstand und samt Steuerungseinrichtung ersetzt. Der Kondensator 43 wird als Hilfs-Kondensator $C_H$ bezeichnet, während der eigentliche Sieb-Kondensator nunmehr als $C'_s$ bezeichnet wird. Der Transistor 48 ist gesperrt, so lange die Spannung $U_{SR}$ kleiner als die Ausgangsspannung $U_a$ sein soll. Der Kondensator $C_H$ wird klein gewählt, so dass er rasch auf die Sollspannung aufgeladen wird. Erreicht seine Spannung $U_{SR}$ den Soll-Wert, also den Eingangsspannungs-Sollwert, so öffnet der Transistor und leitet die überschüssige Energie von der Drossel L auf den deutlich größeren Sieb-Kondensator $C'_s$. Wird, wie es bevorzugt wird, die in Fig. 4 gezeigte Schaltung in einem Schaltregler der Konfiguration der Fig. 2 und 3a eingesetzt, wird die Steuerung 111 durch $U_{SR}$ (und nicht $U_a$) versorgt, so kann die Steuerung 111 sehr schnell funktionsfähig sein, da der Kondensator $C_H$ klein gewählt wird. Damit, also durch Steuern des Umschalters, wird sichergestellt, dass $C_s$ weiter aufgeladen wird, bis die Spannung $U_a$ den Ausgangsspannungs-Sollwert erreicht.

Bei dem in Fig. 4 gezeigten Ausführungsbeispiel für den Eingangsspannungs-Sollwert $U_e$ ein Spannungswert sinnvollerweise gewählt, der von der Konfiguration der Steuerung 111 abhängt. Er wird vorzugsweise so gewählt, dass er zumindest so groß ist, dass die Steuerung 111 mit einer Spannung gleich dem Eingangsspannungs-Sollwert arbeiten kann. Der Ausgangsspannungs-Sollwert wird durch die allgemeine Spezifikation des Schaltreglers vorgegeben sein, da ausgangsseitig eine Last angeordnet wird, die die Ausgangsspannung am Kondensator 46 "sieht". Vorzugsweise wird der Transistor somit erst voll durchgeschaltet und zur Parallelschaltung der beiden Kondensatoren eingesetzt, wenn die Ausgangsspannung $U_a$ genau so groß ist wie die Eingangsspannung $U_e$.

Wie es vorstehend ausgeführt worden ist, wird der erste Kondensator 43 wesentlich kleiner dimensioniert als der zweite Kondensator 46. Zu dem Zeitpunkt, zu dem der steuerbare Widerstand 48 nicht auf dem niedrigen Widerstandswert ist, wirkt somit eine im Vergleich zur spezifizierten SiebKapazität 102 von Fig. 2 oder Fig. 3a beispielsweise reduzierte Siebkapazität, die zunächst, wenn der steuerbare Widerstand 48 einen hohen Widerstand hat, gleich dem Wert von $C_H$ ist und dann entsprechend der Reduzierung des Widerstandswerts des steuerbaren Widerstands 48 immer größer wird, bis sie schließlich gleich der Summe aus $C_H$ und $C'_s$ ist. Im Hochfahrvorgang des Schaltreglers, also wenn die in Fig. 1 gezeigte Quelle 10 über den Schalter 14 eingeschaltet wird, wirkt als Siebkapazität des Schaltreglers lediglich die kleine Kapazität $C_H$. Die eigentlich mit einer kleinen Siebkapazität verbundene große Welligkeit der Ausgangsspannung spielt hier jedoch keine Rolle, da der Schaltregler ohnehin erst zum Versorgen einer Last bereit ist, wenn die Ausgangsspannung den Ausgangsspannungs-Sollwert hat, wobei dann der Transistor $T_1$ voll durchgeschaltet ist und somit die beiden Kapazitäten $C_H$ und $C'_s$ parallel geschaltet sind.

Vorteilhaft ist jedoch, dass die Kapazität $C_H$, weil sie kleiner als die Kapazität $C'_s$ ist, schnell auf einen Spannungspegel kommt, bei dem die Steuerung 111 der Fig. 2 und 3a, die wie es in den Fig. 2 und 3a gezeigt ist, mit $U_{SR}$, also $U_e$ in Fig. 4, versorgt wird.

Wie es bezüglich der Fig. 2 und 3a ausgeführt worden ist, wird es somit bevorzugt, den Eingangsspannungs-Sollwert $U_{e\text{-}soll}$ so groß zu machen, dass die Steuerung 111 der Fig. 2 und 3a, die beim Hochfahren dann, wenn sie funktionsfähig ist, sicherstellt, dass der Wechselschalter 109 mit der positiven Ausgangsschiene 114 verbunden ist. Ferner wurde bereits darauf hingewiesen, dass dieser Spannungspegel, bei dem die Steuerung 111 arbeiten kann, kleiner als die Spannung, die an der Zener-Diode 113b in Fig. 2 abfällt, weniger der Schwellenspannung des Transistors sein muss. Bei dem in Fig. 3a gezeigten Ausführungsbeispiel muss der Spannungspegel, bei dem die Steuerung 111 arbeiten kann, größer als die Schwellenspannung $U_{th}$ des Transistors 106 sein, wenn die Steuerung mit $U_{SR}$, also bei Fig. 4 mit $U_e$ arbeiten soll.

Vorzugsweise ist auch die Steuerungseinrichtung 49 in Fig. 4, die den steuerbaren Widerstand 48 steuert, ausgebildet, um mit $U_e$ versorgt zu werden. Dies bedeutet, dass die Steuerungseinrichtung 49 bereits definiert arbeiten kann, wenn deren Versorgungsspannung $U_e$ bzw. $U_{SR}$ einen bestimmten Wert erreicht hat. Bei diesem Ausführungsbeispiel würde die Steuerungseinrichtung 49 ausgebildet sein, um dann, wenn sie definiert arbeitet, unmittelbar den Widerstandswert des steuerbaren Widerstands 48 zu reduzieren, da dann inhärent klar ist, dass die Eingangsspannung $U_e$ einen Eingangsspannungs-Schwellwert erreicht hat.

Wie es vorstehend dargelegt worden ist, ist die in Fig. 4 gezeigte Schaltung dahingehend vorteilhaft, dass sie die Spannung $U_{SR}$ begrenzt, also eine Spannung $U_e$ bzw. $U_{SR}$ erzeugt, die keine Spannungsspitzen hat, und dass gleichzeitig das Laden des Kondensators $C_s$ am Ausgang der Schaltung beschleunigt wird, dahingehend, dass die Energie der Spannungsspitze zum Laden des (großen) Siebkondensators 46 ausgenutzt wird. Somit wird gleichzeitig das Hochfahren eines Schaltreglers, der die in Fig. 4 gezeigte Schaltung anstelle des Siebkondensators hat, beschleunigt, da die für die Steuerung des Schaltreglers nötige Versorgungsspannung schnell erreicht wird und nicht mit Spannungsspitzen beaufschlagt ist.

**Patentansprüche**

1. Schaltung zum Verarbeiten einer Speisespannung (47a) mit einer Spannungsspitze (60), um eine Ausgangsspannung ($U_a$) mit reduzierten oder eliminierten Spannungsspitzen zu erhalten, mit folgenden Merkmalen:

   einer ersten Kapazität (43) zwischen einem ersten Knoten (41) und einem zweiten Knoten (42), wobei eine Eingangsspannung ($U_e$) zwischen dem ersten Knoten (41) und dem zweiten Knoten (42) aufgrund der Speisespannung (47a) erzeugbar ist;
   einer zweiten Kapazität (46) zwischen einem dritten Knoten (44) und einem vierten Knoten (45), wobei die Ausgangsspannung ($U_a$) zwischen dem dritten Knoten (44) und dem vierten Knoten (45) abgreifbar ist, wobei die erste Kapazität (43) einen kleineren Kapazitätswert hat als die zweite Kapazität (46);
   einem steuerbaren Widerstand (48) zwischen dem ersten Knoten (41) und dem dritten Knoten (44); und
   einer Steuerungseinrichtung (49) zum Ansteuern des steuerbaren Widerstands, wobei die Steuerungseinrichtung (49) ausgebildet ist,
   um in einem ersten Fall (52), in dem die Eingangsspannung ($U_e$) kleiner als ein vorbestimmter Eingangsspannungs-Sollwert ($U_{esoll}$) ist, den steuerbaren Widerstand (48) so anzusteuern, dass der steuerbare Widerstand einen ersten hohen Widerstandswert hat,
   um in einem zweiten Fall (54), in dem die Eingangsspannung ($U_e$) gleich oder größer als der vorbestimmte Eingangsspannungs-Sollwert ($U_{esoll}$) ist, und in dem die Ausgangsspannung ($U_a$) kleiner als der vorbestimmte Ausgangsspannungs-Sollwert ($U_{asoll}$) ist, den steuerbaren Widerstand so anzusteuern, dass der steuerbare Widerstand einen zweiten niedrigeren Widerstandswert hat, so dass eine Ladungsaufnahme der ersten Kapazität (43) zumindest reduziert wird und mehr Ladung in die zweite Kapazität (46) fließt als in dem Fall, in dem der steuerbare Widerstand (48) den hohen Widerstandswert hat, und
   um in einem dritten Fall (56), in dem die Ausgangsspannung ($U_a$) an der zweiten Kapazität (46) gleich oder größer als der vorbestimmte Ausgangsspannungs-Sollwert ($U_{asoll}$) ist, den steuerbaren Widerstand (48) so anzusteuern, dass derselbe einen dritten niedrigen Widerstandswert hat, damit die erste Kapazität (43) und die zweite Kapazität (46) im wesentlichen parallel geschaltet sind,

   wobei der erste Widerstandswert ($R_1$) höher als der zweite Widerstandswert ($R_2$) ist, und wobei der zweite Widerstandswert ($R_2$) höher als der dritte Widerstandswert ($R_3$) ist.

2. Schaltung nach Anspruch 1, bei der der erste Widerstandswert im wesentlichen einen Leerlauf darstellt, und der dritte Widerstandswert im wesentlichen einen Kurzschluß darstellt.

3. Schaltung nach Anspruch 1 oder 2, bei der die Steuerungseinrichtung (49) ausgebildet ist, um in dem zweiten Fall den zweiten Widerstandswert monoton fallend von dem ersten Widerstandswert auf den dritten Widerstandswert zu reduzieren.

4. Schaltung nach einem der vorhergehenden Ansprüche,
bei dem die Steuerungseinrichtung (49) ausgebildet ist, um in dem zweiten Fall den zweiten Widerstandswert derart monoton fallend zu reduzieren, dass die Eingangsspannung ($U_e$) sich nicht aus einem Toleranzbereich heraus bewegt, der sich um den vorbestimmten Eingangsspannungs-Sollwert erstreckt.

5. Schaltung nach Anspruch 4, bei der der Toleranzbereich gewählt ist, um sich um plus oder minus 20% um den vorbestimmten Eingangsspannungs-Sollwert herum zu erstrecken.

6. Schaltung nach einem der vorhergehenden Ansprüche,
bei der die erste Kapazität (43) so dimensioniert ist, dass sie kleiner als eine Grenzkapazität ist, die eine obere Grenze für eine Zeitdauer bestimmt, wie schnell die Eingangsspannung ($U_e$) den vorbestimmten Eingangsspannungs-Sollwert erreicht, wenn eine Speisespannung mit einer vorbestimmten Anstiegssteilheit zugrunde gelegt wird.

7. Schaltung nach einem der vorhergehenden Ansprüche, bei der die erste Kapazität (43) so dimensioniert ist, dass sie eine Kapazität hat, die mindestens so groß ist, dass bei dem vorbestimmten Eingangsspannungs-Sollwert eine vorbestimmte Ladungsmenge auf der ersten Kapazität (43) gespeichert ist.

8. Schaltung nach Anspruch 7, bei der die vorbestimmte Ladungsmenge so groß ist, dass durch die Eingangsspannung ($U_e$) die Steuerungseinrichtung (49) zum Steuern des Widerstandswerts oder eine Steuerung (111) zum Regeln der Eingangsspannung funktionsfähig ist.

9. Schaltung nach einem der vorhergehenden Ansprüche, bei der die zweite Kapazität (46) zumindest so groß ist, dass sie eine Ladung speichern kann, die aufgrund einer Spannungsspitze (60) der Speisespannung in den ersten Knoten (41) getrieben wird, ohne dass die Ausgangsspannung einen Toleranzbereich um den Ausgangsspannungs-Sollwert herum erzeugt.

10. Schaltung nach Anspruch 9, bei der sich der Toleranzbereich um plus oder minus 20% um den Ausgangsspannungs-Sollwert herum erstreckt.

11. Schaltung nach einem der vorhergehenden Ansprüche, bei der der Ausgangsspannungs-Sollwert gleich dem Eingangsspannungs-Sollwert ist.

12. Schaltung nach einem der vorhergehenden Ansprüche, bei der die Steuerungseinrichtung ausgebildet ist, um zur Bestimmung, ob der erste, der zweite oder der dritte Fall vorliegt, die Eingangsspannung ($U_e$) mit dem in der Steuerungseinrichtung (49) gespeicherten Eingangsspannungs-Sollwert zu vergleichen, und um die Ausgangsspannung ($U_a$) mit dem in der Steuerungseinrichtung (49) gespeicherten Ausgangsspannungs-Sollwert zu vergleichen.

13. Schaltung nach einem der Ansprüche 1 bis 11, bei der die Steuerungseinrichtung (49) ausgebildet ist, um auf der Basis einer zeitlichen Zustandsfolge zu einem Zeitpunkt von dem ersten Fall in den zweiten Fall überzugehen, und um zu einem späteren Zeitpunkt von dem zweiten Fall in den dritten Fall überzugehen, wobei eine Zeitdauer zwischen dem zweiten Zeitpunkt und dem ersten Zeitpunkt in der Steuerungseinrichtung (49) einprogrammiert ist.

14. Verfahren zum Verarbeiten einer Speisespannung (47a) mit einer Spannungsspitze (60), um eine Ausgangsspannung ($U_a$) mit reduzierten oder eliminierten Spannungsspitzen zu erhalten, mit folgenden Schritten:

Laden einer ersten Kapazität ($C_H$) zwischen einem ersten Knoten (41) und einem zweiten Knoten (42), wobei eine Eingangsspannung zwischen dem ersten Knoten (41) und dem zweiten Knoten (42) aufgrund der Speisespannung (47a) erzeugt wird;
Laden einer zweiten Kapazität (46) zwischen einem dritten Knoten (44) und einem vierten Knoten (45), wobei die Ausgangsspannung ($U_a$) zwischen dem dritten Knoten (44) und dem vierten Knoten (45) erzeugt wird, wobei die erste Kapazität (43) einen kleineren Kapazitätswert hat als die zweite Kapazität (46);
Steuern eines Widerstands zwischen dem ersten Knoten (41) und dem dritten Knoten (44) derart,
dass in einem ersten Fall, in dem die Eingangsspannung ($U_e$) kleiner als ein vorbestimmter Eingangsspannungs-Sollwert ist, der steuerbare Widerstand einen ersten hohen Widerstandswert ($R_1$) hat,

dass in einem zweiten Fall, in dem die Eingangsspannung ($U_e$) gleich oder größer als der vorbestimmte Eingangsspannungs-Sollwert ist, und in dem die Ausgangsspannung ($U_a$) kleiner als der vorbestimmte Ausgangsspannungs-Sollwert ($U_{asoll}$) ist, der steuerbare Widerstand einen zweiten niedrigeren Widerstandswert hat, so dass das Laden der ersten Kapazität (43) zumindest reduziert wird, und dass das Laden der zweiten Kapazität (46) erhöht wird, im Vergleich zu dem Fall, in dem der steuerbare Widerstand (48) den hohen Widerstandswert hat, und

dass in einem dritten Fall, in dem die Ausgangsspannung an dem zweiten Kondensator gleich oder größer als der vorbestimmte Ausgangsspannungs-Sollwert ist, der steuerbare Widerstand einen dritten niedrigen Widerstandswert ($R_3$) hat, so dass die erste und die zweite Kapazität (43, 46) im wesentlichen parallel geschaltet sind,

wobei der erste Widerstandswert ($R_1$) höher als der zweite Widerstandswert ($R_2$) ist, und wobei der zweite Widerstandswert größer als der dritte Widerstandswert ($R_3$) ist.

15. Schaltregler zum Erzeugen einer geregelten Schaltregler-Ausgangsspannung ($U_a$) unter Verwendung einer Eingangsspannung (10), mit folgenden Merkmalen:

einem steuerbaren Schalter (106);
einem Netzwerk (101) mit einer Diode (104), einer Induktivität (100) und einer Siebeinrichtung (102);
einer Schaltregler-Steuerung (111) zum Regeln der Ausgangsspannung durch periodisches Betätigen des steuerbaren Schalters (106), um die Ausgangsspannung zu regeln, und

wobei die Siebeinrichtung (102) eine Schaltung nach einem der Ansprüche 1 bis 13 aufweist.

16. Schaltregler nach Anspruch 15, bei dem die Speisespannung von einer Speisespannungserzeugungseinrichtung an die erste Kapazität (43) lieferbar ist, wobei die Speisespannungserzeugungseinrichtung die Spule (100) und die Diode (104) des Netzwerks aufweist, und wobei die Spannung an der zweiten Kapazität (46) die Ausgangsspannung des Schaltreglers darstellt.

17. Schaltregler nach Anspruch 15 oder 16, bei dem die Schaltregler-Steuerung (111) ausgebildet ist, um den steuerbaren Schalter basierend auf der Eingangsspannung ($U_e$) an der ersten Kapazität nach einem Einschalten der Schaltregler-Eingangsspannung (10) zu steuern.

18. Schaltregler nach einem der Ansprüche 15 bis 17, bei dem die Schaltregler-Steuerungseinrichtung (49) von der Eingangsspannung ($U_e$) an der ersten Kapazität (43) versorgbar ist.

19. Schaltregler nach einem der Ansprüche 15 bis 18,
bei dem die Schaltregler-Steuerung (111) ausgebildet ist, um einen Umschalter zu steuern, wobei der Umschalter mit einer Spannungskopplungseinrichtung (113a, 113b, 113c) verbunden ist, um entweder ein Potential an einer positiven Ausgangsschiene (114) oder ein Potential an einer negativen Ausgangsschiene (116) mit einem Steuereingang des steuerbaren Schalters (106) zu koppeln,
wobei der steuerbare Schalter (106) als Transistor ausgebildet ist, und
wobei der Steuereingang (107) des steuerbaren Schalters (106) ein Gate-Anschluß des Transistors (106) ist.

## Claims

1. A circuit for processing a supply voltage (47a) with a voltage peak (60) to obtain an output voltage ($U_a$) with reduced or eliminated voltage peaks, comprising:

a first capacitance between a first node (41) and a second node (42), wherein an input voltage ($U_e$) can be generated between the first node (41) and the second node (42) due to the supply voltage (47a);
a second capacitance (46) between a third node (44) and a fourth node (45), wherein the output voltage ($U_a$) can be tapped between the third node (44) and the fourth node (45), wherein the first capacitance (43) has a smaller capacitance value than the second capacitance (46);
a controllable resistor (48) between the first node (41) and the third node (44); and
a control device (49) for controlling the controllable resistor, wherein the control device (49) is formed to control the controllable resistor (48) in a first case (52), where the input voltage ($U_e$) is smaller than a predetermined input voltage set value ($U_{esoll}$), such that the controllable resistor has a first high resistance,

to control the controllable resistor in a second case (54), where the input voltage ($U_e$) is equal to or higher than the predetermined input voltage set value ($U_{esoll}$), and where the output voltage ($U_a$) is smaller than the predetermined output voltage set value ($U_{aesoll}$) such that the controllable resistor has a second, lower resistance, so that a charge acceptance of the first capacitance (43) is at least reduced and more charge flows into the second capacitance (46) than in the case where the controllable resistor (48) has the high resistance, and

to control the controllable resistor (48) in a third case (56), where the output voltage ($U_a$) at the second capacitance (46) is equal to or higher than a predetermined output voltage set value ($U_{aesoll}$), such that the same has a third low resistance so that the capacitance (43) and the second capacitance (46) are substantially connected in parallel,

wherein the first resistance ($R_1$) is higher than the second resistance ($R_2$), and wherein the second resistance ($R_2$) is higher than the third resistance ($R_3$).

2. The circuit according to claim 1, wherein the first resistance substantially represents an open and the third resistance substantially represents a short.

3. The circuit according to claim 1 or 2, wherein the control device (49) is formed to reduce, in the second case, the second resistance monotonously falling from the first resistance to the third resistance.

4. The circuit according to one of the previous claims, wherein the control device (49) is formed to reduce, in the second case, the second resistance monotonously falling such that the input voltage ($U_e$) does not move out of a tolerance range extending around the predetermined input voltage set value.

5. The circuit according to claim 4, wherein the tolerance range is chosen such that the same extends plus or minus 20% around the predetermined input voltage set value.

6. The circuit according to one of the previous claims, wherein the first capacitance (43) is dimensioned such that it is smaller than a limiting capacitance, which determines an upper limit for a time period how quickly the input voltage ($U_e$) reaches the predetermined input voltage set value, when a supply voltage with a predetermined rising steepness is assumed.

7. The circuit according to one of the previous claims, wherein the first capacitance (43) is dimensioned such that it has a capacitance, which is at least so high that a predetermined amount of charge is stored on the first capacitance (43) at the predetermined input voltage set value.

8. The circuit according to claim 7, wherein the predetermined amount of charge is so high that the control device (49) for controlling the resistance or a control (111) for regulating the input voltage is operable through the input voltage ($U_e$).

9. The circuit according to one of the previous claims, wherein the second capacitance (46) is at least so high that it can store a charge, which is driven into the first node (48) due to a voltage peak (60) of the supply voltage, without the output voltage generating a tolerance range around the output voltage set value.

10. The circuit according to claim 9, wherein the tolerance range extends to plus minus 20% around the output voltage set value.

11. The circuit according to one of the previous claims, wherein the output voltage set value is equal to the input voltage set value.

12. The circuit according to one of the previous claims, wherein the control device is formed to compare the input voltage ($U_e$) to the input voltage set value stored in the control device (49) and to compare the output voltage ($U_a$) to the output voltage set value stored in the control device (49), for determining whether the first, second or third case is present.

13. The circuit according to one of claims 1 to 11, wherein the control device (49) is formed to transit from the first case to the second case at one time based on a time state sequence, and to transit from the second case to the third case at a later time, wherein a time period between the second time and the first time is programmed into the control device (49).

**14.** A method for processing a supply voltage (47a) with a voltage peak (60) for obtaining an output voltage ($U_a$) with reduced or eliminated voltage peaks, comprising the steps of:

charging a first capacitance ($C_H$) between a first node (41) and a second node (42), wherein an input voltage is generated between the first node (41) and the second node (42) due to the supply voltage (47a);

charging a second capacitance (46) between a third node (44) and a fourth node (45), wherein the output voltage ($U_a$) is generated between the third node (44) and the fourth node (45), wherein the first capacitance (43) has a smaller capacitance value than the second capacitance (46);

controlling a resistor between the first node (41) and the third node (44), such

that in a first case, where the input voltage ($U_e$) is smaller than a predetermined input voltage set value, the controllable resistor has a first high resistance ($R_1$),

that in a second case, where the input voltage ($U_e$) is equal to or higher than the predetermined input voltage set value, and where the output voltage ($U_a$) is smaller than the predetermined output voltage set value ($U_{aesoll}$) the controllable resistor has a second lower resistance, so that charging the first capacitance (43) is at least reduced, and that charging the second capacitance (46) is increased compared to the case where the controllable resistor (48) has the high resistance, and

that in a third case, where the output voltage at the second capacitor is equal to or higher than the predetermined output voltage set value, the controllable resistor has a third lower resistance ($R_3$), so that the first and second capacitance (43,46) are substantially connected in parallel,

wherein the first resistance ($R_1$) is higher than the second resistance ($R_2$), and wherein the second resistance ($R_2$) is higher than the third resistance ($R_3$).

**15.** A switching regulator for generating a regulated switching regulator output voltage ($U_a$) by using an input voltage (10), comprising:

a controllable switch (106);

a network (101) with a diode (104), an inductance (100) and a filter device (102);

a switching regulator control (111) for regulating the output voltage by periodically operating the controllable switch (106) to regulate the output voltage, and

wherein the filter device (102) has a circuit according to one of claims 1 to 13.

**16.** The switching regulator according to claim 15, wherein the supply voltage can be provided to the first capacitance (43) from a supply voltage generator, wherein the supply voltage generator comprises the coil (100) and the diode (104) of the network, and wherein the voltage at the second capacitor (46) represents the output voltage of the switching regulator.

**17.** The switching regulator according to claim 15 or 16, wherein the switching regulator control (111) is formed to control the controllable switch based on the input voltage ($U_e$) at the first capacitance after switching on the switching regulator input voltage (10).

**18.** The switching regulator according to one of claims 15 to 17, wherein the switching regulator control device (49) can be supplied by the input voltage ($U_e$) at the first capacitance (43).

**19.** The switching regulator according to one of claims 15 to 18, wherein the switching regulator control (111) is formed to control a change-over switch, wherein the change-over switch is connected to a voltage coupling device (113a, 113b, 113c) to either couple a potential at a positive output rail (114) or a potential at a negative output rail (116) to a control input of the controllable switch (106),

wherein the controllable switch (106) is formed as transistor, and

wherein the control input (107) of the controllable switch (106) is a gate of the transistor (106).

**Revendications**

**1.** Circuit pour conditionner une tension d'alimentation (47a) avec une crête de tension (60), pour obtenir une tension de sortie ($U_a$) à crêtes de tension réduites ou éliminées, aux caractéristiques suivantes :

une première capacité (43) entre un premier noeud (41) et un deuxième noeud (42), une tension d'entrée ($U_e$)

entre le premier noeud (41) et le deuxième noeud (42) pouvant être générée sur base de la tension d'alimentation (47a) ;

une deuxième capacité (46) entre un troisième noeud (44) et un quatrième noeud (45), la tension de sortie ($U_a$) entre le troisième noeud (44) et le quatrième noeud (45) pouvant être mesurée, la première capacité (43) ayant une valeur de capacité inférieure à la deuxième capacité (46);

une résistance réglable (48) entre le premier noeud (41) et le troisième noeud (44) ; et

un dispositif de commande (49) destiné à activer la résistance réglable, le dispositif de commande (49) étant réalisé de manière à

activer la résistance réglable (48), dans un premier cas (52) où la tension d'entrée ($U_e$) est inférieure à une valeur de consigne de tension d'entrée prédéterminée ($U_{esoll}$), de sorte que la résistance réglable ait une haute valeur de résistance,

activer la résistance réglable (48), dans un deuxième cas (54) où la tension d'entrée ($U_e$) est égale ou supérieure à la valeur de consigne de tension d'entrée prédéterminée ($U_{esoll}$) et où la tension de sortie ($U_a$) est inférieure à la valeur de consigne de tension d'entrée prédéterminée ($U_{esoll}$), de sorte que la résistance réglable ait une deuxième valeur de résistance inférieure, de sorte qu'une consommation de charge de la première capacité (43) soit au moins réduite et qu'il circule vers la deuxième capacité (46) plus de charge que dans le cas où la résistance réglable (48) a la haute valeur de résistance, et

activer la résistance réglable (48), dans un troisième cas (56) où la tension de sortie ($U_a$) est, à la deuxième capacité (46), égale ou supérieure à tension d'entrée prédéterminée ($U_{esoll}$), de sorte qu'elle ait une troisième valeur de résistance faible, pour que la première capacité (43) et la deuxième capacité (46) soient connectées sensiblement en parallèle,

la première valeur de résistance ($R_1$) étant supérieure à la deuxième valeur de résistance ($R_2$), et la deuxième valeur de résistance ($R_2$) étant supérieure à la troisième valeur de résistance ($R_3$).

2.  Circuit selon la revendication 1, dans lequel la première valeur de résistance représente substantiellement un fonctionnement à vide, et la troisième valeur de résistance représente substantiellement un court-circuit.

3.  Circuit selon la revendication 1 ou 2, dans lequel le dispositif de commande (49) est réalisé de manière à réduire, dans le deuxième cas, la deuxième valeur de résistance en descente monotone de la première valeur de résistance à la troisième valeur de résistance.

4.  Circuit selon l'une des revendications précédentes,
    dans lequel le dispositif de commande (49) est réalisé de manière à réduire, dans le deuxième cas, la deuxième valeur de résistance en descente monotone de sorte que la tension d'entrée ($U_e$) ne sorte pas d'une plage de tolérance qui s'étend autour de la valeur de consigne de tension d'entrée prédéterminée.

5.  Circuit selon la revendication 4, dans laquelle la plage de tolérance est choisie de manière à s'étendre de plus ou moins 20% autour de la valeur de consigne de tension d'entrée prédéterminée.

6.  Circuit selon l'une des revendications précédentes,
    dans lequel la première capacité (43) est dimensionnée de sorte qu'elle soit inférieure à une capacité limite qui détermine une limite supérieure pour un laps de temps de la rapidité à laquelle la tension d'entrée ($U_e$) atteint la valeur de consigne de tension d'entrée prédéterminée lorsqu'elle est basée sur une tension d'alimentation avec une pente ascendante prédéterminée.

7.  Circuit selon l'une des revendications précédentes, dans lequel la première capacité (43) est dimensionnée de sorte qu'elle ait une capacité qui est au moins aussi grande qu'à la valeur de consigne de tension d'entrée prédéterminée soit accumulée une quantité de charge prédéterminée sur la première capacité (43).

8.  Circuit selon la revendication 7, dans lequel la quantité de charge prédéterminée est aussi grande que par la tension d'entrée ($U_e$) soit fonctionnel le dispositif de commande (49) destiné à régler la valeur de résistance ou une commande (111) destinée à régler la tension d'entrée.

9.  Circuit selon l'une des revendications précédentes, dans lequel la deuxième capacité (46) est au moins aussi grande qu'elle puisse accumuler une charge qui, par suite d'une crête (60) de la tension d'alimentation, est amenée au premier noeud (41), sans que la tension de sortie ne génère une plage de tolérance autour de la valeur de consigne de tension de sortie.

**10.** Circuit selon la revendication 9, dans lequel la plage de tolérance s'étend de plus ou moins 20% autour de la valeur de consigne de tension de sortie.

**11.** Circuit selon l'une des revendications précédentes, dans lequel la valeur de consigne de tension de sortie est égale à la valeur de consigne de tension d'entrée.

**12.** Circuit selon l'une des revendications précédentes, dans lequel le dispositif de commande est réalisé de manière à comparer, pour déterminer s'il est présent le premier, le deuxième ou le troisième cas, la tension d'entrée ($U_e$) à la valeur de consigne de tension d'entrée mémorisée dans le dispositif de commande (49), et à comparer la tension de sortie ($U_a$) avec la valeur de consigne de tension de sortie mémorisée dans le dispositif de commande (49).

**13.** Circuit selon l'une des revendications 1 à 11, dans lequel le dispositif de commande (49) est réalisé de manière à passer, sur base d'une succession d'états dans le temps, à un moment du premier cas au deuxième cas, et à passer, à un moment ultérieur, du deuxième cas au troisième cas, un laps de temps entre le deuxième moment et le premier moment étant programmé dans le dispositif de commande (49).

**14.** Procédé pour conditionner une tension d'alimentation (47a) avec une crête de tension (60), pour obtenir une tension de sortie ($U_a$) à crêtes de tension réduites ou éliminées, aux étapes suivantes consistant à :

charger une première capacité ($C_H$) entre un premier noeud (41) et un deuxième noeud (42), une tension d'entrée ($U_e$) entre le premier noeud (41) et le deuxième noeud (42) étant générée sur base de la tension d'alimentation (47a) ;
charger une deuxième capacité (46) entre un troisième noeud (44) et un quatrième noeud (45), la tension de sortie ($U_a$) entre le troisième noeud (44) et le quatrième noeud (45) étant générée, la première capacité (43) ayant une valeur de capacité inférieure à la deuxième capacité (46);
régler une résistance entre le premier noeud (41) et le troisième noeud (44), de sorte que
dans un premier cas où la tension d'entrée ($U_e$) est inférieure à une valeur de consigne de tension d'entrée prédéterminée, la résistance réglable ait une première valeur de résistance élevée,
dans un deuxième cas où la tension d'entrée ($U_e$) est égale ou supérieure à la valeur de consigne de tension d'entrée prédéterminée et où la tension de sortie ($U_a$) est inférieure à la valeur de consigne de tension d'entrée prédéterminée ($U_{esoll}$), la résistance réglable ait une deuxième valeur de résistance inférieure, de sorte que le chargement de la première capacité (43) soit au moins réduit et que le chargement de la deuxième capacité (46) soit augmenté, comparé au cas où la résistance réglable (48) a la haute valeur de résistance, et
dans un troisième cas où la tension de sortie est, au deuxième condensateur, égale ou supérieure à la valeur de tension d'entrée prédéterminée, la résistance réglable ait une troisième valeur de résistance faible ($R_3$), de sorte que la première et la deuxième capacité (43, 46) soient connectées sensiblement en parallèle, la première valeur de résistance ($R_1$) étant supérieure à la deuxième valeur de résistance ($R_2$), et la deuxième valeur de résistance ($R_2$) étant supérieure à la troisième valeur de résistance ($R_3$).

**15.** Régulateur pour générer une tension de sortie de régulateur régulée ($U_a$) à l'aide d'une tension d'entrée (10), aux caractéristiques suivantes :

un commutateur réglable (106) ;
un réseau (101) avec une diode (104), une inductance (100) et un dispositif de tamisage (102) ;
une commande de régulateur (111) destinée à régler la tension de sortie par actionnement périodique du commutateur réglable (106), pour régler la tension de commande, et
le dispositif de tamisage (102) présentant un circuit selon l'une des revendications 1 à 13.

**16.** Régulateur selon la revendication 15, dans lequel la tension d'alimentation peut être fournie par un dispositif de génération de tension d'alimentation à la première capacité (43), le dispositif de génération de tension d'alimentation présentant la bobine (100) et la diode (104) du réseau, et la tension à la deuxième capacité (46) représentant la tension de sortie du régulateur.

**17.** Régulateur selon la revendication 15 ou 16, dans lequel la commande de régulateur (111) est réalisée de manière à commander le commutateur réglable sur base de la tension d'entrée ($U_e$) à la première capacité après un enclenchement de la tension d'entrée de régulateur (10).

**18.** Régulateur selon l'une des revendications 15 à 17, dans lequel le dispositif de commande de régulateur (49) peut être alimenté par la tension d'entrée ($U_e$) à la première capacité (43).

**19.** Régulateur selon l'une des revendications 15 à 18,
dans lequel la commande de régulateur (111) est réalisée de manière à commander un commutateur, le commutateur étant relié à un dispositif de couplage de tension (113a, 113b, 113c), pour soit coupler un potentiel à un rail de sortie positif (114), soit coupler un potentiel à un rail de sortie négatif (116) avec une entrée de commande du commutateur réglable (106),
le commutateur réglable (106) étant réalisé sous forme de transistor, et
l'entrée de commande (107) du commutateur réglable (106) étant une connexion de porte du transistor (106).

FIG. 1

FIG. 2

FIG. 3a

FIG. 3b

## FIG 4

$R_i$ 47b 41

47a

$U_{sp}$ MIT Spg. SPITZEN

$U_e$ BZW. $U_{SR}$

$C_H$

43

42

102

48 STEUERBARER WI·DERSTAND

44

T1

49

46

$C_S$

$U_e$ → STEUERUNGS-EINRICHTUNG ← $U_a$

$U_a$

VSS

45

$U_e$ soll
$U_a$ soll

## FIG 5

50

START | $U_e$ soll
$U_a$ soll

51

$U_e < U_e$ soll

52

T1 OFFEN,
R1=HOCH

NUR 1. KOND. WIRD GELADEN

53

$U_e \geq U_e$ soll
$U_a < U_a$ soll

54

$T_1$ LEITET MITTEL,
$R_2$=MITTEL

2. KOND. WIRD GELADEN

55

$U_a \geq U_a$ soll

56

$T_1$ LEITET VOLL,
$R_3$=NIEDRIG

C1,C2 SIND
VOLL PARALLEL
GESCHALTET

## FIG. 6A

SPEISE-SPANNUNG

60

SPANNUNGSSPITZE

AUSGANGSSPANNUNGSSOLLWERT
$U_a$ soll

$U_{sp}$

EINGANGSSPANNUNGSSOLLWERT $U_E$ SOLL

$t_1$   $t_2$   t

## FIG. 6B

EINGANGS-SPG.

$t_1$   $t_2$   t

## FIG. 6C

AUSGANGS-SPG.

$t_1$   $t_2$   t

## FIG. 6D

WIDER-STAND R

$R_1$
62
61
$R_2$
$R_3$

$t_1$   $t_2$   t

$U_e \geqslant U_e$ soll
$U_a < U_a$ soll

$U_a \geqslant U_a$ soll

$U_e < U_e$ soll

# FIG. 7
## (STAND DER TECHNIK)